# EUROPÄISCHE PATENTSCHRIFT

(11) **EP 4 157 762 B1**
(45) Veröffentlichungstag und Bekanntmachung des Hinweises auf die Patenterteilung: **25.12.2024**
(21) Anmeldenummer: 21729235.8
(22) Anmeldetag: 21.05.2021
(51) Int. Cl.: B65G 43/02

(54) **VERFAHREN UND EINRICHTUNG ZUM MASCHINELLEN ERMITTELN DES FUNKTIONSZUSTANDS VON TRAGROLLEN EINER GURTFÖRDERANLAGE**
METHOD AND SYSTEM FOR THE MACHINE-BASED DETERMINATION OF THE FUNCTIONAL STATE OF SUPPORT ROLLERS OF A BELT CONVEYOR SYSTEM
PROCÉDÉ ET SYSTÈME DE DÉTERMINATION PAR MACHINE DE L'ÉTAT DE FONCTIONNEMENT DE ROULEAUX DE SUPPORT D'UN SYSTÈME DE TRANSPORTEUR À COURROIE

(30) Priorität: 25.05.2020 DE 102020206497
(43) Veröffentlichungstag der Anmeldung: 05.04.2023
(73) Patentinhaber: FLSmidth A/S, 2500 Valby (DK)
(72) Erfinder: ESSER, Philipp, 50672 Köln (DE); WEI, Sophie Ruoshan, 80469 München (DE); KREX, Martin, 46236 Bottrop (DE); HANDL, David, 81667 München (DE)
(86) Internationale Anmeldenummer: PCT/EP2021/063613
(87) Internationale Veröffentlichungsnummer: WO 2021/239604

(56) Entgegenhaltungen:
- EP-A1- 3 543 179
- DE-A1- 102012 107 847
- CARVALHO REGIVALDO ET AL: "A UAV-Based Framework for Semi-Automated Thermographic Inspection of Belt Conveyors in the Mining Industry", SENSORS, vol. 20, no. 8, 15 April 2020 (2020-04-15), pages 2243, XP055825768, Retrieved from the Internet <URL:https://www.ncbi.nlm.nih.gov/pmc/articles/PMC7218908/pdf/sensors-20-02243.pdf> DOI: 10.3390/s20082243
- YANG WENJUAN ET AL: "An inspection robot using infrared thermography for belt conveyor", 2016 13TH INTERNATIONAL CONFERENCE ON UBIQUITOUS ROBOTS AND AMBIENT INTELLIGENCE (URAI), 1 August 2016 (2016-08-01), pages 1 - 6, XP055825788, ISBN: 978-1-5090-0821-6, Retrieved from the Internet <URL:https://www.researchgate.net/profile/Xuhui-Zhang-6/publication/309777040_An_inspection_robot_using_infrared_thermography_for_belt_conveyor/links/5c5fe9b092851c48a9c6602e/An-inspection-robot-using-infrared-thermography-for-belt-conveyor.pdf> DOI: 10.1109/URAI.2016.7734069

## Beschreibung

Die Erfindung betrifft ein Verfahren zum maschinellen Ermitteln des Funktionszustands von Tragrollen einer Gurtförderanlage während des Betriebs der Gurtförderanlage, wobei mindestens ein unbemanntes Fahrzeug mit wenigstens einer bildgebenden Sensorik vorgesehen ist, mittels derer die Gurtförderanlage zumindest abschnittsweise sensorisch in Form von Bilddaten erfassbar ist, wobei Bilddaten von zumindest einem Teilbereich der Gurtförderanlage als Wärmebilddaten erfasst werden. Weiterhin betrifft die Erfindung ein Verfahren zur Identifikation von funktionsbeeinträchtigten Tragrollen einer Gurtförderanlage auf der Grundlage des vorgenannten Verfahrens sowie eine Einrichtung zum maschinellen Ermitteln des Funktionszustand von Tragrollen einer Gurtförderanlage während des Betriebs der Gurtförderanlage, die Einrichtung umfassend mindestens ein entlang zumindest eines Teilbereichs der Gurtförderanlage bewegbares unbemanntes Fahrzeug mit wenigstens einer bildgebenden Sensorik, mittels derer die Gurtförderanlage zumindest abschnittsweise sensorisch in Form von Bilddaten erfassbar ist und die zumindest eine Wärmebildsensorvorrichtung zur Erfassung von Wärmebilddaten umfasst.

Zum Transport von Schüttgütern wie etwa von Abraum, Erzen, Brennstoffen, Baustoffen und dergleichen über eine vorgegebene Förderstrecke (Transportstrecke) werden als stationäre oder halbstationäre Stetigförderer häufig Gurtförderanlagen (Gurtförderer, Fördergurtanlagen, Förderbandanlagen, Bandförderanlagen, Gurtbandförderanlagen) eingesetzt. In einer Gurtförderanlage wird ein endloser Fördergurt (Traggurt, Förderband) durch mindestens eine Antriebsstation (Antriebstrommel) in eine umlaufende Bewegung versetzt. Dabei wird der Fördergurt als Obertrum zwischen zwei Umlenkstationen, an welchen der Fördergurt durch eine Umlenkwalze umgelenkt wird, von einer (anfangsseitigen) Umlenkstation zu einer weiteren (endseitigen) Umlenkstation geführt. Von der endseitigen Umlenkstation aus wird der umgelenkte Fördergurt als Untertrum zu der anfangsseitigen Umlenkstation zurückgeführt, dort erneut umgelenkt und wieder als Obertrum geführt. In der Regel bildet dabei das Obertrum das Lasttrum (Arbeitstrum, Zugtrum) und das Untertrum das Leertrum. Über die gesamte Länge der Förderstrecke wird der Fördergurt im Obertrum und Untertrum von Tragrollen (Laufrollen) gestützt, die als Trag- und Führungselemente dienen.

Für Schüttgüter gelangen aufgrund der höheren Aufnahmekapazität und besseren Materialführung neben Fördergurten in Flachform (in einer Flachgurtförderanlage) auch Fördergurte mit einem gemuldeten Obertrum zum Einsatz (als Muldengurt in einer Muldengurtförderanlage, etwa mit V-förmiger Muldung bei je zwei Tragrollen oder mit U-förmiger Muldung, etwa bei drei, vier fünf oder mehr Tragrollen) oder einem gerollten Obertrum (als Schlauchgurt/Rohrgurt, jeweils in einer Schlauchgurtförderanlage). Je nach Förderaufgabe wird ein in einem gemuldeten oder gerollten Obertrum geführter Fördergurt im Untertrum in Flachform, in gemuldeter Form oder vereinzelt sogar in gerollter Form zurückgeführt. Häufig ist hierbei im stärker belasteten Obertrum eine U-förmige Muldung zu finden und im rückführenden Untertrum die Flachform oder eine V-förmige Muldung.

Der endlos umlaufende Fördergurt muss auf der Förderstrecke im beladenen Obertrum wie auch im zurückgeführten Untertrum (dort im unbeladenen oder auch beladenen Zustand) gestützt und geführt werden, wobei eine Stützung besonders wichtig für den beladenen Teil des Fördergurts ist. Als Tragelemente und Führungselemente werden zur Stützung und Führung Tragrollen in einer Traggerüstkonstruktion verwendet, einer Tragrollenstation (Laufrollenstation), wobei die Tragrollen einen rollenden Kontakt zwischen Traggerüstkonstruktion und Fördergut ermöglichen. Tragrollen weisen einen Laufflächenbereich auf, der stirnseitig von zwei Kappenbereichen begrenzt wird, den Tragrollenböden. In der Regel wird der Laufflächenbereich von einem zylinderförmigen Stahlrohrabschnitt gebildet, wobei hierfür auch andere Materialien und Geometrien möglich sind. Die Kappenbereiche bilden üblicherweise Gusskappen oder Blechkappen, die in die stirnseitigen Öffnungen des Laufflächenbereichs eingepresst oder eingeschweißt sind. In jedem Kappenbereich ist eine Lagerhalterung zur Aufnahme einer durch die Tragrolle hindurchgeführten Achse oder eines in den Innenbereich der Tragrolle hineinragenden Achszapfens vorgesehen. Die Lagerhalterungen sind Wälzlager (die zumeist integrale Bestandteile des Kappenbereichs bilden), so dass die Tragrollen über eine Innenlagerung rotierbar gelagert sind. Typische Ausführungen von Tragrollen sind Gegenstand industrieller Normung und Richtliniengebung (so etwa in DIN 15207, DIN 22112 oder VDI 2341).

In einer Tragrollenstation ist zumindest eine Tragrolle rotierbar gelagert und abgestützt, üblicherweise sind in einer Tragrollenstation mehrere Tragrollen angeordnet, vor allem bei Tragrollenstationen für gemuldete oder gerollte Fördergurte. Tragrollenstationen stellen also Stützungspunkte für den Fördergurt dar und sind typischerweise als starre Gerüststruktur (Tragrollenstuhl, Laufrollenstuhl, Rollenstuhl, Rollenbock) ausgebildet, in der die Achsen der einzelnen Tragrollen entweder starr oder als bewegliche Struktur (Tragrollengirlande, Laufrollengirlande) angeordnet sind. In einer derartigen beweglichen Struktur sind die Achsen der einzelnen Tragrollen relativ zueinander bewegbar angeordnet, etwa indem diese über Ketten miteinander verbunden sind. Tragrollenstationen können entlang der Förderstrecke individuell positionierbar sein, im Rahmen einer übergeordneten Gerüststruktur mit benachbarten Tragrollenstationen verbindbar oder aber als integraler Bestandteil des Traggerüsts der Gurtförderanlage ausgebildet sein. Die Gesamtanzahl an Tragrollen einer Gurtförderanlage ergibt sich also aus der Anzahl an Tragrollen pro Tragrollenstation und der Anzahl an Tragrollenstationen auf der gesamten Förderstrecke; diese hängt somit vom Abstand der Tragrollen in Förderrichtung ab.

Der Fördergurt einer Gurtförderanlage weist typischerweise eine obere Deckplatte und eine untere Deckplatte auf, zwischen welchen ein tragendes Element (Karkasse) angeordnet ist, das als Einlage ausgeführt ist. Diese Karkasse besteht aus einer Faserschicht oder mehrerer Faserschichten, die in Gummi eingebettet sind. Die Faserschicht dient vor allem als Längsträger (Zugträger, Gurtzugträger), so dass Fasern dazu in Längsrichtung des Fördergurtes ausgerichtet angeordnet sind. Im Betrieb werden die in Förderrichtung (in Transportrichtung, das heißt Bewegungsrichtung des Fördergurtes und damit in dessen Längsrichtung) wirkenden Zugkräfte über diese Fasern übertragen oder abgeleitet. In der Regel sind die Längsträger textile Gewebe, Stahlseile, hochfeste Polymere oder entsprechende Kompositsysteme. Als Querarmierung sind häufig zusätzliche Festigkeitsträger vorgesehen, die quer zur Längsrichtung ausgerichtet angeordnet sind und den Fördergurt quer zur Förderrichtung verstärken. In der Regel sind diese zusätzlichen Festigkeitsträger Stahlseile oder Textilgewebe. Die obere Deckplatte und die untere Deckplatte des Fördergurtes sind Gummilagen, wobei die obere Deckplatte (Tragschicht, Tragseite) zur Aufnahme des Schüttguts dient und die untere Deckplatte (Laufschicht, Laufseite) im Kontakt mit den Umlenkwalzen, Antriebstrommeln, Tragrollen und sonstigen Führungs- und Stützelementen steht. Infolge des direkten Kontakts der oberen Deckplatte mit dem - zum Teil scharfkantigen - Fördergut ist die obere Deckplatte in der Regel verschleißfest ausgebildet und weist eine größere Stärke auf als die untere Deckplatte. Die Stärke der tragrollenseitigen unteren Deckplatte liegt bei vielen Fördergurten im Bereich von 3 mm bis 5 mm.

Je nach Einsatzgebiet und Art des Förderguts sind Gurtförderanlagen unterschiedlichen Belastungen und Umgebungsbedingungen ausgesetzt. So unterscheiden sich etwa die Anforderungen an Gurtförderanlagen im Tagebau von den Anforderungen an Gurtförderanlagen, die unter Tage Verwendung finden; ähnliches gilt für den geografischen Einsatzort, etwa in Subpolargebieten oder in den Tropen. Die individuellen Betriebsbedingungen einer Gurtförderanlage führen zu einem spezifischen Verschleiß der Einzelkomponenten einer solchen Anlage, weshalb eine regelmäßige Überwachung des Funktionszustands aller verschleißenden Komponenten der Gurtförderanlage in kurzen Zeitintervallen erforderlich ist. Vor allem die Überwachung von Tragrollen und insbesondere deren Lagern (Wälzlagern) gestaltet sich als aufwändig, da jede Gurtförderanlage eine Vielzahl an Tragrollen aufweist, die - anders als etwa der Fördergurt selbst - stationär sind und daher stets nur am jeweiligen Installationsort geprüft werden können. Gerade bei Tragrollen wirkt sich das Umgebungsklima und die Art und Beschaffenheit des Förderguts in erheblichen Maße auf den Verschleiß aus und bestimmt somit die Anforderungen an die Qualität der Tragrollen mit. Sind Tragrollen - und insbesondere deren Lager - in ihrer Funktion beeinträchtigt, dann erhöht sich der Laufwiderstand, den die Tragrollen einer Bewegung des Fördergurtes in Förderrichtung entgegensetzen. Dies hat nicht nur einen höheren Energiebedarf beim Transport des Förderguts zur Folge, es besteht darüber hinaus auch das Risiko einer Beschädigung des Fördergurts und daher eines Totalausfalls der gesamten Gurtförderanlage. Um funktionsbeeinträchtigte Tragrollen rechtzeitig vor einem Totalausfall zu erkennen und austauschen zu können, müssen kritische Parameter der Tragrollen in kurzen Zeitintervallen überwacht werden.

Ein erhöhter Laufwiderstand der Tragrollen hat eine höhere Temperatur der Lager zur Folge, so dass die Temperatur der Tragrollen und insbesondere der Lager als Indikator für etwaige Funktionsbeeinträchtigungen dienen kann. So kann etwa die Funktionalität und Lebensdauererwartung von Lagern von Tragrollen dann umso schlechter ausfallen, je wärmer das Lager im Förderbetrieb wird. Der beim Lager auftretende Verschleiß hängt dabei unter anderem von der Schmierung und der Qualität der verwendeten Tragrollen (insbesondere der Qualität der Lager) ab. Weitere Faktoren, die bei den Lagern zu einem höheren Verschleiß und damit zu höheren Betriebstemperaturen führen können, sind beispielsweise eine höhere Drehzahl (entsprechend hohen Fördergurtgeschwindigkeiten und/oder geringen Tragrollendurchmessern), eine höhere auf die Tragrollen wirkende Radiallast oder ein größerer Abstand zwischen benachbarten Tragrollenstationen. Zur Überwachung des Verschleißes wird daher in Gurtförderanlagen typischerweise die Temperatur der Tragrollen in regelmäßigen Abständen überprüft, um den Funktionszustand der Tragrollen ermitteln zu können. Im Falle eines dabei beobachteten Temperaturanstiegs lässt sich eine Funktionsbeeinträchtigung frühzeitig erkennen, so dass frühzeitig entsprechende Maßnahmen getroffen werden können, um die Standzeiten der Gurtförderanlage zu minimieren.

Bislang wird bei den meisten Gurtförderanlagen die Temperatur der Tragrollen durch Personal gemessen, das sämtliche Tragrollen der Gurtförderanlage über die gesamte Länge der Transportstrecke manuell auf deren Funktionstüchtigkeit hin untersucht und dabei die Abstände zwischen den Tragrollen entlang der Gurtförderanlage zu Fuß, mit einem Fahrrad oder in einem Kraftfahrzeug zurücklegt. Eine derartige Inspektion erfolgt dabei durch Sichtprüfung, durch akustische Prüfung oder in einer Temperaturmessung, etwa mit Hilfe von fest installierten Temperatursonden, einem Strahlungsthermometer (Infrarotmessgerät, Pyrometer) oder einer Wärmebildkamera.

Industrielle Gurtförderanlagen können bei Förderbandgeschwindigkeiten von mehreren Metern pro Sekunde und Förderleistungen von mehreren Kilotonnen pro Stunde Förderstrecken mit Längen von 10 km und mehr aufweisen. Jede Tragrollenstation kann mehrere Tragrollen aufweisen, und die Abstände zwischen benachbarten Tragrollenstationen können so gering sein wie 2 m und weniger, so dass sich in einer Gurtförderanlage mehrere Tausend Tragrollen befinden können. Insbesondere bei der Gewinnung mineralischer Rohstoffe wie etwa im Tagebau kann an einem Standort die Gesamtlänge aller Gurtförderanlagen durchaus 100 km übersteigen. Bei der daraus resultierenden großen Anzahl an Tragrollen ist das Abschreiten oder Abfahren der Gurtförderanlagen über alle Transportstrecken durch einen entsprechenden Servicemitarbeiter in einer sich zeitlich regelmäßig wiederholenden Abfolge mit einem hohen Arbeitsaufwand verbunden, der entsprechende Kosten zur Folge hat. Zur Verringerung der Kosten wird daher auch in Erwägung gezogen, das Inspektionsintervall zu vergrößern. Werden die einzelnen Tragrollen jedoch in zu großen zeitlichen Abständen inspiziert, erhöht sich dadurch das Ausfallrisiko der Gurtförderanlage.

Überdies unterliegt die manuelle Funktionsüberprüfung in Abhängigkeit vom jeweiligen Servicemitarbeiter einer gewissen Schwankungsbreite hinsichtlich der konkreten Durchführung der Inspektion, was sich negativ auf die Reproduzierbarkeit des ermittelten Funktionszustands der Tragrollen auswirkt - und damit auf die Zuverlässigkeit der Inspektion insgesamt. Darüber hinaus lassen sich bei einer Prüfung einzelner Tragrollen auch Fehler des Servicemitarbeiters grundsätzlich nicht ausschließen (beispielsweise können die erfassten Daten zu Funktionszustand, Qualität und zu erwartender Lebensdauer der Tragrollen oder zur Wartung der Gurtförderanlagen unvollständig oder falsch ermittelt werden). Insgesamt handelt es sich also bei der herkömmlichen Überprüfung des Funktionszustands der Tragrollen einer Gurtförderanlage um einen wenig transparenten Prozess, was aufgrund der damit verbundenen Unsicherheit wiederum zu einem erhöhten Arbeitsaufwand führen kann (etwa aufgrund von Doppelbestimmungen), der erhöhte Kosten mit sich bringt.

Aus den Fachpublikationen "A UAV-Based Framework for Semi-Automated Thermographic Inspection of Belt Conveyors in the Mining Industry" von R. Carvalho et al. [Sensors, Bd. 20, Nr. 8 (2020), S. 2243ff.] und "An inspection robot using infrared thermography for belt conveyor" von W. Yang und X. Zheng [eingereicht 2019 zur 13. Internationalen Konferenz über Ubiquitous Robots and Ambient Intelligence (URAI) aus 2016, S. 1-6] sind automatisierte oder teilautomatisierte Verfahren bekannt, in welchen Wärmebilddaten nach Segmentierung und Klassifizierung ausgewertet einer Datenanalyse unterzogen werden, um beschädigte Tragrollen zu identifizieren. Mit derzeitigem Technologiestand ist jedoch die Zuverlässigkeit einer solchen Auswertung von Wärmebilddaten noch nicht ideal. Diese Fachpublikationen offenbaren ein Verfahren nach dem Oberbegriff des Anspruchs 1 und eine Vorrichtung nach dem Oberbegriff des Anspruchs 13.

Demzufolge ist es eine Aufgabe der vorliegenden Erfindung, ein Verfahren zur Verfügung zu stellen, welches die vorgenannten Nachteile beseitigt und das es insbesondere erlaubt, den Funktionszustand von Tragrollen einer Gurtförderanlage verlässlicher und reproduzierbarer zu ermitteln als dies bislang der Fall ist, dabei gleichzeitig den erforderlichen Arbeitsaufwand und die Kosten zu verringern sowie bezüglich des Funktionszustands der Tragrollen eine bessere Transparenz zu bieten, zusätzlich dem Betreiber und dem Wartungspersonal aber auch eine Dokumentation der Tragrollenzustands und der Wartungshistorie zu ermöglichen. Auf diese Weise soll auch eine einfache und zuverlässige Überwachung des Funktionszustands von Tragrollen realisiert werden, die sich auch über eine längere Zeit in kurzen Zeitabständen durchführen lässt, ohne dass dadurch ein hoher personeller Aufwand entsteht. Im Rahmen dieser Überwachung soll zusätzlich ein Verschleiß von Tragrollen sowie das Auftreten etwaiger die Funktion beeinträchtigender Anomalien frühzeitig erkannt werden, bevor kritische Situationen entstehen, um diesen proaktiv begegnen zu können und Wartungskosten wie auch Standzeiten gegenüber herkömmlichen Verfahren zu verringern. Weiterhin war es wünschenswert, ein derartiges Verfahren zur Verfügung zu stellen, auf dessen Grundlage sich Prognosen für eine zukünftige zeitliche Entwicklung des Funktionszustands individueller Tragrollen treffen lassen, und entsprechend dieser Prognosen eine Empfehlung für spezifische Wartungspläne abgeben zu können, mit deren Hilfe sich die Effizienz des Anlagenbetriebs optimieren und etwaige Standzeiten minimieren lassen. Eine weitere Aufgabe besteht darin, eine Vorrichtung bereitzustellen, welche die zuvor genannten Vorteile bietet.

Gelöst werden diese Aufgaben durch ein Verfahren zum maschinellen Ermitteln des Funktionszustands von Tragrollen einer Gurtförderanlage während des Betriebs der Gurtförderanlage, ein Verfahren zur Identifikation von funktionsbeeinträchtigten Tragrollen einer Gurtförderanlage, welches das Verfahren zum maschinellen Ermitteln des Funktionszustands von Tragrollen beinhaltet sowie eine Einrichtung zum maschinellen Ermitteln des Funktionszustands von Tragrollen einer Gurtförderanlage während des Betriebs der Gurtförderanlage, mit den in den unabhängigen Ansprüchen angegebenen Merkmalen. Vorteilhafte Weiterbildungen ergeben sich aus den Unteransprüchen, der nachfolgenden Beschreibung sowie den Zeichnungen.

Die Erfindung beinhaltet ein Verfahren zum maschinellen Ermitteln des Funktionszustands von Tragrollen einer Gurtförderanlage während des Betriebs der Gurtförderanlage, wobei mindestens ein unbemanntes Fahrzeug mit wenigstens einer bildgebenden Sensorik vorgesehen ist, mittels derer die Gurtförderanlage zumindest abschnittsweise sensorisch in Form von Bilddaten erfassbar ist, wobei Bilddaten von zumindest einem Teilbereich der Gurtförderanlage als Wärmebilddaten erfasst werden, wobei in den erfassten Bilddaten der Gurtförderanlage mindestens eine Erkennungsbildbereichsposition automatisch ermittelt wird, in welcher zumindest ein Teilbereich einer Tragrolle abgebildet ist, für jede ermittelte Erkennungsbildbereichsposition aus den Bilddaten jeweils eine Analysenbildbereichsposition in den Wärmebilddaten automatisch festgelegt wird, und in jeder festgelegten Analysenbildbereichsposition Wärmebilddaten automatisch analysiert werden, um den Funktionszustand von Tragrollen automatisch zu ermitteln, wobei die von der bildgebenden Sensorik erfassbaren Bilddaten zusätzlich zu den Wärmebilddaten auch Lichtbilddaten umfassen, wobei Bilddaten von zumindest einem Teilbereich der Gurtförderanlage auch als Lichtbilddaten erfasst werden, die erfassten Bilddaten der Gurtförderanlage, in denen mindestens eine Erkennungsbildbereichsposition automatisch ermittelt wird, Lichtbilddaten sind, in denen als Bilddatenbereiche Lichtbilddatenbereiche automatisch erkannt werden, und die Position eines jeweils erkannten Lichtbilddatenbereichs als Erkennungsbildbereichsposition automatisch bereitgestellt wird. Hierbei sind insbesondere Teilbereiche von Tragrollen von Bedeutung, die deren Lager (Wälzlager) enthalten.

Ein Verfahren zum maschinellen Ermitteln des Funktionszustands von Tragrollen einer Gurtförderanlage ist ein Verfahren, bei dem für einzelne Tragrollen oder eine Vielzahl an Tragrollen die jeweiligen Funktionszustände der individuellen Tragrollen maschinell ermittelt werden, also unter wesentlicher Mitwirkung einer Maschine. Der Funktionszustand ist dabei der Zustand einer Tragrolle im Hinblick darauf, inwieweit diese ihre definierte Aufgabe erfüllen kann, also das Stützen des Fördergurts in einer abrollenden Bewegung, die einer Längsbewegung des Fördergurts einen allenfalls geringen (im Idealfall vernachlässigbaren) mechanischen Widerstand entgegenbringt; eine Tragrolle, die diese Aufgabe nicht oder nicht hinreichend erfüllt, ist funktionsbeeinträchtigt. Bevorzugt werden bei einem solchen Verfahren die Funktionszustände aller Tragrollen ermittelt. Da sich das Verfahren speziell auf die Ermittlung des Funktionszustands der Tragrollen beschränkt, lassen sich etwaige Funktionsbeeinträchtigungen anderer Komponenten der Gurtförderanlage wie beispielsweise Schäden am Fördergurt damit nicht erkennen. Allerdings ist es gegebenenfalls möglich, das erfindungsgemäße Verfahren um weitere Maßnahmen zu ergänzen und so ein kombiniertes neues Verfahren zu schaffen, in welchem sich zusätzlich zum Funktionszustand der Tragrollen auch eine Funktionsbeeinträchtigung anderer Komponenten ermitteln ließe.

Es ist wichtig, dass das erfindungsgemäße Verfahren der Funktionszustandsermittlung während des Betriebs der Gurtförderanlage dient, so dass für die Funktionszustandsermittlung der Betrieb der Gurtförderanlage nicht unterbrochen werden muss. Die vorliegende Funktionszustandsermittlung basiert auf der beim Betrieb der Gurtförderanlage auftretenden Wärmeentwicklung an den Tragrollen, so dass das vorliegende Verfahren vor allem für eine Anwendung im laufenden Betrieb geeignet ist.

Für das erfindungsgemäße Verfahren ist mindestens ein unbemanntes Fahrzeug mit wenigstens einer bildgebenden Sensorik vorgesehen, gegebenenfalls auch mehrere unbemannte Fahrzeuge. Als Fahrzeug wird jedes Fortbewegungsmittel oder Fahrbetriebsmittel verstanden, unabhängig davon, ob es zur Beförderung von Personen geeignet ist oder nicht. Grundsätzlich umfasst dieser Begriff insbesondere Landfahrzeuge (bodengebundene Fahrzeuge), zum Beispiel etwa Straßenfahrzeuge (etwa solche mit Bereifung), Geländefahrzeuge (etwa solche mit Bereifung oder Gleisketten), Schienenfahrzeuge, Luftfahrzeuge (Fluggeräte) und Wasserfahrzeuge sowie insbesondere auch spurgebundene Fahrzeuge (bahngebundene Fahrzeuge mit oder ohne Spurführung, etwa Schienenfahrzeuge oder Seilbahnen) und spurfreie Fahrzeuge. Besonders günstig ist es, wenn im vorliegenden Fall als Fahrzeug eine Schwebeplattform (Multicopter, insbesondere ein Quadrocopter (Quadricopter, Quadrotor)) zum Einsatz kommt. Auch hiervon abweichende Ausgestaltungen sind möglich, etwa als eine von einem Führungskabel herabhängende Gondel und dergleichen. Ein unbemanntes Fahrzeug (Drohne) ist ein Fahrzeug, in oder auf welchem sich während der Bewegung keine Person befindet oder befinden muss; im weitesten Sinne schließt dieser Begriff auch mobile Roboter ein. Das unbemannte Fahrzeug kann beliebig ausgebildet sein, etwa als ferngesteuertes unbemanntes Fahrzeug (remotely operated vehicle; ROV) oder als semi-autonomes unbemanntes Fahrzeug, vor allem aber auch als autonomes unbemanntes Fahrzeug. Ein ferngesteuertes Fahrzeug ist ein Fahrzeug, dass von Bedienern gesteuert und kontrolliert wird, die sich jedoch nicht in oder auf dem Fahrzeug befinden; eine solche Fernsteuerung ist häufig als Funkfernsteuerung realisiert. Als Bediener kommen menschliche Personen oder auch externe Regelungen in Frage, die sich nicht auf dem Fahrzeug befinden; eine derartige externe Regelung kann etwa als externe Datenverarbeitungsvorrichtung realisiert sein. Bei einem semi-autonomen Fahrzeug handelt es sich um ein teilautomatisiertes Fahrzeug, in dem ein Bediener im Betrieb einzelne Aufgaben übernehmen muss, was etwa über im Rahmen einer Fernsteuerung erfolgen kann. Im Gegensatz dazu ist ein autonomes Fahrzeug ein Fahrzeug, das sich selbstständig fortbewegt und somit eigenständig operiert (also ohne unmittelbare Einwirkung eines Fahrers oder Bedieners) und sich dabei weitgehend autonom verhält. Bei einem autonomen Fahrzeug weist das Fahrzeug eine Regelung auf, die sich auf dem Fahrzeug befindet. Typischerweise folgt ein autonomes Fahrzeug einer vorgegebenen Strecke, wobei die Streckenführung beispielsweise in Form von anzusteuernden Wegpunkten vorgegeben sein kann. Diese Wegpunkte steuert das Fahrzeug etwa mit Hilfe eines satellitengestützen Positionserfassungssystems, zum Beispiel einem Empfänger für ein Navigationssatellitensystem wie GPS, oder mit Hilfe eines optischen Bilderfassungssystems an. In der Regel weist ein autonomes Fahrzeug weitere Systeme auf, die ein autonomes Fahren (automatisiertes Fahren, pilotiertes Fahren) gestatten, etwa ein System zur Kollisionsvermeidung oder ein System zur automatischen Ausrichtung, damit an vorgegebenen Wegpunkten eine optimale Ausrichtung vorliegt, um Bilddaten der Zielobjekte bestmöglich erfassen zu können.

Als bildgebende Sensorik ist eine Sensoranordnung (Detektor) vorgesehen, welche insbesondere in einem bildgebenden Verfahren aus Messgrößen eines realen Objektes seiner Umgebung ein quantitatives zweidimensionales oder dreidimensionales Abbild erzeugt und dieses als Bilddaten ausgibt. Diese Messgrößen und/oder daraus abgeleitete Informationen werden von der Sensorik ortsaufgelöst und über weitere Parameter wie etwa Intensitäten und/oder Farben kodiert als (insbesondere digitale) Bilddaten ausgegeben, also als Datensätze, in denen die jeweilige Bildinformation der abgebildeten Objekte inhaltlich zusammenhängend repräsentiert ist. Zweidimensionale Abbilder sind vor allem Bilddarstellungen (Abbildungen), in denen die Bildpunkte zweidimensional angeordnet sind; derartige zweidimensionale Abbilder können beispielsweise monoskopisch oder stereoskopisch erzeugt und dargestellt werden. Im Gegensatz dazu sind dreidimensionale Abbilder vor allem Bilddarstellungen, in denen die Bildpunkte dreidimensional angeordnet sind, etwa in Form von Punktwolken. Neben der Bildpunktrepräsentation können zweidimensionale Abbilder und dreidimensionale Abbilder auch aus elementaren zweidimensionalen oder dreidimensionalen geometrischen Formen (Primitiven, Grundobjekten, grafischen Grundformen, Raumbezugsgrundformen, etwa für zweidimensionale Vektorgrafiken oder 3D-Modelle) zusammengesetzt sein oder Kombinationen davon mit Bildpunkten sein. Eine derartige Sensorik weist mindestens eine Sensorvorrichtung auf, kann darüber hinaus aber weitere Sensorvorrichtungen beinhalten. Die Messgrößen können insbesondere die Wellenlänge und Intensität der vom Objekt ausgehenden (emittierten, reflektierten oder gestreuten) elektromagnetischen Strahlung aus einem Wellenlängenbereich von 100 nm bis 1 mm sein. In diesem Fall können die Sensorvorrichtungen Bildsensorvorrichtungen wie etwa Kameras sein, etwa eine Stehbildkamera zum Aufnehmen stationärer Bilder (Einzelbilder) oder eine Laufbildkamera zum Aufnehmen von Bewegtbildern (Filmen, Videos), insbesondere eine Wärmebildsensorvorrichtung, eine Lichtbildsensorvorrichtung oder eine Ultraviolettbildsensorvorrichtung. Eine Wärmebildsensorvorrichtung kann etwa eine Wärmebildkamera (Thermografiekamera, Thermalkamera, Thermalbildkamera, Thermobildkamera, Infrarotkamera, Wärmebildgerät) sein, mittels welcher vor allem Infrarotstrahlung (IR-Strahlung, Wärmestrahlung) aus einem Wellenlängenbereich von etwa 700 nm bis 1 mm erfasst und als Wärmebilddaten bereitgestellt wird, insbesondere aus dem nahen Infrarotbereich (NIR) von 700 nm bis 1.000 nm oder aus dem mittleren Infrarotbereich (MIR) von 3,5 µm (Mikrometer) bis 15 µm (Mikrometer). Eine Lichtbildsensorvorrichtung kann etwa eine Lichtbildkamera (optische Kamera, RGB-Kamera) sein, mittels welcher vor allem sichtbares Licht aus einem Wellenlängenbereich von etwa 380 nm bis 780 nm (insbesondere bis 700 nm) erfasst und als Lichtbilddaten bereitgestellt wird. Eine Ultraviolettbildsensorvorrichtung kann etwa eine Ultraviolettkamera (UV-Kamera) sein, mittels welcher vor allem ultraviolette Strahlung (UV-Strahlung) aus einem Wellenlängenbereich von etwa 100 nm bis 380 nm erfasst und als Ultraviolettbilddaten bereitgestellt wird. Bei einer Sensoranordnung kann das Abbild in dem bildgebenden Verfahren aber auch aus anderen Messgrößen erzeugt werden, beispielsweise aus der Laufzeit oder Frequenzverschiebung eines von der Sensoranordnung ausgesendeten und von der Umgebung reflektierten Signals, aus welchem in einem abrasternden Verfahren (etwa Laserscanning, Lidar / Ladar, Sonar oder Radar) ortsaufgelöste Entfernungsinformationen erhalten und als Entfernungsbilddaten bereitgestellt werden. Ferner kann das unbemannte Fahrzeug neben der bildgebenden Sensorik weitere Sensorvorrichtungen aufweisen, um andere Parameter aus oder in der Umgebung zu erfassen.

Gemäß der Erfindung ist ferner vorgesehen, dass mittels der Sensorik die Gurtförderanlage zumindest abschnittsweise sensorisch in Form von Bilddaten erfassbar ist. Dabei werden Bilddaten von zumindest einem Teilbereich der Gurtförderanlage als Wärmebilddaten erfasst. Derartige Wärmebilddaten enthalten als Messgröße häufig nur einen Intensitätswert, der mit der Intensität der von der Oberfläche des abgebildeten Objekts abgestrahlten Infrarotstrahlung korreliert ist und somit den räumlichen Verlauf der Oberflächentemperatur des Objekts repräsentiert. Zusätzlich zu den Wärmebilddaten werden mittels der Sensorik auch andere Bilddaten sensorisch erfasst, nämlich Lichtbilddaten. Zur Erfassung kann das unbemannte Fahrzeug etwa entlang zumindest eines Teilbereichs der Gurtförderanlage bewegt werden, etwa indem es von einem eigenen Antrieb auf dem Fahrzeug selber oder von einem externen Antrieb bewegt wird. Das zumindest abschnittsweise Erfassen der Gurtförderanlage kann auch beinhalten, dass die gesamte Gurtförderanlage erfasst werden kann (etwa in Form von Bewegtbildern, die bei einer Fahrt des unbemannten Fahrzeugs entlang der gesamten Gurtförderanlage aufgenommen werden). In der Regel wird aufgrund der Größe jedoch von der Sensorik jeweils nur ein Teilbereich der Gurtförderanlage mittels der Sensorvorrichtungen der Sensorik (und somit sensorisch) erfasst. Dabei ist es etwa möglich, dass für Teilbereiche der Gurtförderanlage, in denen sich keine Tragrollen befinden, keine Bilddaten erfasst werden. Davon unabhängig ist, dass zur Erfassung der Tragrollen über die gesamte Länge der Gurtförderanlage in der Praxis durchaus mehrere unbemannte Fahrzeuge eingesetzt werden können oder dass die Erfassung der gesamten Gurtförderanlage auf mehrere Einzelschritte aufgeteilt wird, in denen jeweils nur ein Teil der Gurtförderanlage sensorisch erfasst wird.

Gemäß der Erfindung ist ferner vorgesehen, dass in den erfassten Bilddaten der Gurtförderanlage mindestens eine Erkennungsbildbereichsposition automatisch ermittelt wird, in welcher zumindest ein Teilbereich einer Tragrolle abgebildet ist. Automatisch bedeutet, dass das System die konkrete Handlung - hier das Ermitteln der Erkennungsbildbereichsposition - im Rahmen eines selbsttätigen Ablaufs nach einem festgelegten Plan oder in Bezug auf festgelegte Zustände vornimmt, ohne dass hierfür der unmittelbare Eingriff von menschlichem Bedienungspersonal erforderlich ist; damit ist nicht ausgeschlossen, dass die automatische Vornahme der konkreten Handlung durch Eingreifen von menschlichem Bedienungspersonal unterbrochen werden kann, etwa in Gefahrensituation, oder dass bei Schritten außerhalb der automatisch vorgenommenen Handlung ein Eingreifen von menschlichem Bedienungspersonal möglich (oder sogar erforderlich) ist oder dass die Handlung vor der konkreten Ausführung durch menschliches Bedienpersonal vorbereitet wurde, etwa bei der Programmierung der entsprechenden Steuerung oder Regelung oder bei einem Trainieren im Zusammenhang mit maschinellem Lernen.

Vorliegend wird in den Bilddaten mindestens eine Erkennungsbildbereichsposition automatisch ermittelt. Mindestens eine Erkennungsbildbereichsposition bedeutet, dass in den Bilddaten eine Erkennungsbildbereichsposition oder auch mehrere Erkennungsbildbereichspositionen ermittelt werden; wird in Bilddaten keine Erkennungsbildbereichsposition ermittelt, so ist es nicht erforderlich, diese Daten einer weiteren Verarbeitung zuzuführen. Eine Erkennungsbildbereichsposition ist die Position eines Bilddatenbereichs (also eines Bereichs innerhalb der Bilddaten), in welchem ein vorgegebenes Zielobjekt oder Teile davon erkannt wurden, etwa als Ergebnis eines Bildvergleichs oder einer Mustererkennung. Bei einem Bildvergleich werden erfasste Bilddaten direkt mit vorgegebenen Vergleichsbilddaten verglichen, die zu einem früheren Zeitpunkt aufgenommen wurden. Bei einer Mustererkennung werden die erfassten Bilddaten (gegebenenfalls nach einer Vorverarbeitung zur Datenreduktion, also um die Komplexität der Bilddaten durch Entfernen unerwünschter oder irrelevanter Bilddaten zu verringern, etwa im Rahmen von Filteroperationen, Schwellenwertoperationen, Mittelungsoperationen oder Normierungsoperationen) einer Merkmalsgewinnung und Merkmalsreduktion unterzogen, gefolgt von einer Klassifizierung der Merkmale in entsprechende Klassen und von einer Bilderkennung. Bei Bilddaten einer Gurtförderanlage kommen als entsprechende Klassen für die zu identifizierenden Zielobjekte neben den Tragrollen (einschließlich der Lager dieser Rollen) auch andere Komponenten der Anlage in Frage, beispielsweise Gerüstelemente der Traggerüstkonstruktion, Fundamente, Fördergurte, Umlenkstationen, Unterstände, Leitbleche, Kabel, Schläuche und dergleichen, aber auch das Fördergut oder häufig auftretende Strukturen der Umgebung wie etwa Felsen. Bildbereiche, in denen sich Strukturen befinden, die nicht Tragrollen, sondern vielmehr anderen Zielobjekten zuzuordnen sind, können so von einer weiteren Analyse ausgeschlossen werden. Typischerweise wird bei einer Klassifizierung auf der Grundlage mehrerer Klassen den Objekten für jede Klasse zunächst ein entsprechender Wahrscheinlichkeitswert zugewiesen und das Objekt dann schließlich der Klasse mit dem höchsten Wahrscheinlichkeitswert zugeordnet.

Vorliegend kommt es vor allem darauf an, Tragrollen und deren Teile zu erkennen, weshalb eigentlich die Klassifizierung von Einzelelementen aus den Bilddaten zu der Klasse "Tragrollen und Teile davon" ausreichend sein könnte. Als Klassifizierung bezeichnet man das Zusammenfassen (Einteilen, Zuordnen) von Objekten anhand bestimmter Merkmale zu vorher festgelegten Klassen (Gruppen, Mengen, Kategorien), welche zusammen eine Klassifikation bilden, also eine Ansammlung abstrakter Klassen (Konzepte, Typen, Kategorien), die zur Abgrenzung und Ordnung verwendet werden. Allerdings ist es auch möglich und sinnvoll, die Vielzahl an Einzelelementen nicht bloß einer einzigen Klasse zuzuordnen, sondern einer Vielzahl unterschiedlicher Klassen. Stattdessen ist es aber auch möglich, in den erfassten Bilddaten der Gurtförderanlage die mindestens eine Erkennungsbildbereichsposition automatisch zu ermitteln, indem in den Bilddaten Bilddatenbereiche automatisch erkannt werden, in denen zumindest ein erkennbares Objekt abgebildet ist, in den so erkannten Bilddatenbereichen unter den erkennbaren Objekten Tragrollen oder Teilbereiche von Tragrollen automatisch erkannt werden und für jede erkannte Tragrolle sowie für jeden erkannten Teilbereich einer Tragrolle die Position des Bilddatenbereichs, in dem die Tragrolle oder der Teilbereich der Tragrolle abgebildet ist, als Erkennungsbildbereichsposition bereitgestellt wird. Damit werden unter den erkennbaren Objekten lediglich Tragrollen oder Teilbereiche von Tragrollen erkannt, die erkennbaren Objekte werden also nicht in andere, ebenfalls mögliche Zuordnungsklassen klassifiziert, beispielsweise als Gerüstelemente der Traggerüstkonstruktion, Fundamente, Fördergurte, Umlenkstationen, Unterstände, Kabel, Schläuche, Fördergut oder Umgebungsstrukturen, sondern bei der Erkennung würde sich auf die Erkennung von Tragrollen und deren Teilbereichen beschränkt. Infolge der Beschränkung der Erkennung erkennbarer Objekte auf lediglich eine Zuordnungsklasse, nämlich die der Tragrollen oder deren Teilbereiche, wird der Erkennungsschritt stark vereinfacht.

Wird in den Bilddaten ein Teilbereich ermittelt, in welchem zumindest ein Teilbereich einer Tragrolle (also ein Objekt oder mehrere Objekte ausgewählt aus der Liste umfassend eine Tragrolle oder einen Teilbereich einer Tragrolle, was also auch eine Vielzahl an Tragrollen oder eine Vielzahl an deren Teilbereichen sowie Kombinationen davon beinhaltet) abgebildet ist und erkannt wird, dann stellt die Position des erkannten Teilbereichs innerhalb der Bilddaten dessen Erkennungsbildbereichsposition dar. Typischerweise wird ein Erkennungsbildbereich so gewählt, dass die Tragrolle oder deren Teilbereich darin zentral angeordnet ist. Die Form des Erkennungsbildbereichs, dessen Position innerhalb der Bilddaten die Erkennungsbildbereichsposition darstellt, kann beliebig gewählt werden, in der Regel wird eine einfache geometrische Form gewählt, welche die erkannte Tragrollenstruktur als Rahmen umhüllt, beispielsweise für zweidimensionale Bilddatensätze ein Rechteck, ein Kreis oder eine Ellipse, für dreidimensionale Bilddatensätze ein Quader, eine Kugel oder ein Zylinder (natürlich sind auch komplexere Formen möglich, etwa zweidimensionale oder dreidimensionale Splines). Bei zweidimensionalen Bilddatensätzen wird die jeweilige Erkennungsbildbereichsposition sinnvollerweise in Form von zweidimensionalen Koordinaten des Erkennungsbildbereichs angegeben, beispielsweise als kartesische Koordinaten oder Polarkoordinaten innerhalb der Bilddaten, bei dreidimensionalen Bilddatensätzen in Form von dreidimensionalen Koordinaten des Erkennungsbildbereichs, beispielsweise als kartesische Koordinaten, Kugelkoordinaten oder Zylinderkoordinaten innerhalb der Bilddaten. Bei einem rechteckigen Rahmen kann dessen Position also etwa durch Koordinaten gegenüberliegender Ecken angegeben werden (also in Form zweier kartesischer Koordinatenpaare) und bei einem kreisförmigen Rahmen etwa durch den Mittelpunkt und Radius (also eines kartesischen Koordinatenpaares und eines Abstands).

Gemäß der Erfindung wird dabei das Verfahren so durchgeführt, dass die von der bildgebenden Sensorik erfassbaren Bilddaten zusätzlich zu den Wärmebilddaten auch Lichtbilddaten umfassen, wobei Bilddaten von zumindest einem Teilbereich der Gurtförderanlage auch als Lichtbilddaten erfasst werden, die erfassten Bilddaten der Gurtförderanlage, in denen mindestens eine Erkennungsbildbereichsposition automatisch ermittelt wird, Lichtbilddaten sind, in denen als Bilddatenbereiche Lichtbilddatenbereiche automatisch erkannt werden, und die Position eines jeweils erkannten Lichtbilddatenbereichs als Erkennungsbildbereichsposition automatisch bereitgestellt wird. Demzufolge weist die Sensorik des unbemannten Fahrzeugs zusätzlich zu der Wärmebildsensorvorrichtung auch eine Lichtbildsensorvorrichtung auf. Von beiden Bildsensorvorrichtungen werden Bilddaten erfasst, wobei von zumindest einem Teilbereich der Gurtförderanlage sowohl Wärmebilddaten als auch korrespondierende Lichtbilddaten erfasst werden. Die Lichtbilddaten werden verwendet, um die Positionen von Erkennungsbildbereichen (Erkennungsbildbereichspositionen) automatisch zu ermitteln, in denen Tragrollen oder Teile von Tragrollen abgebildet sind. Auf der Grundlage der aus den Lichtbilddaten ermittelten Erkennungsbildbereichspositionen werden in den Wärmebilddaten die entsprechenden Analysenbildbereichspositionen festgelegt, in denen dann die Wärmebilddaten analysiert werden. Lichtbildsensorvorrichtungen weisen in der Regel höhere Bildauflösungen auf als Wärmebildsensorvorrichtungen, darüber hinaus wird von Wärmebildsensorvorrichtungen in der Regel nur eine Messgröße erfasst (die Oberflächentemperatur des Objekts, häufig als monochrome Intensität oder als Farbe kodiert) während von Lichtbildsensorvorrichtungen typischerweise mindestens zwei Messgrößen erfasst werden (Lichtintensität und Lichtfarbe/Lichtwellenlänge). Für die Erkennung von Zielobjekten wie Tragrollen, etwa durch Bildvergleich oder Mustererkennung, bieten Lichtbilddaten daher grundsätzlich mehr Informationen als Wärmebilddaten. Hinzu kommt, dass in Wärmebilddaten in der Regel nur die Form des Zielobjekts abgebildet ist während in Lichtbilddaten weitere Strukturelemente abgebildet sind wie beispielsweise Oberflächentexturen und Schattenwurf, welche auf einem Thermalbild nicht erkennbar sind. Bei Verwendung von Lichtbildern lässt sich also die höhere Erkennungsgüte, die auf den markanten und charakteristischen Darstellungselementen der Lichtbilder beruht, auf die weniger markanten Wärmebilder übertragen. Eine Erkennung auf der Grundlage von Lichtbilddaten ist daher erheblich zuverlässiger als eine Erkennung auf der Grundlage von Wärmebilddaten.

Dieses Verfahren lässt sich auch mit einem Verfahren kombinieren, in welchem die erfassten Bilddaten zusätzlich Wärmebilddaten sind - infolge der parallelen Verwendung von beiden Arten an Bilddaten zur Erkennung - Lichtbilddaten und zusätzlich Wärmebilddaten - lässt sich die Erkennungsgenauigkeit weiterhin steigern, was insbesondere auch bei schlechten Lichtverhältnissen von Vorteil sein kann.

Gemäß einer Ausführungsform der Erfindung ist ferner vorgesehen, dass für jede ermittelte Erkennungsbildbereichsposition aus den Bilddaten jeweils eine Analysenbildbereichsposition in den Wärmebilddaten automatisch festgelegt wird. Die Analysenbildbereichsposition ist die Position in den Wärmebilddaten, in denen nach der Festlegung eine Analyse durchgeführt wird, um den Funktionszustand der im Erkennungsbildbereich dargestellten Tragrollen zu ermitteln. Die aus den Bilddaten gewonnene Positionsinformation für die Erkennungsbildbereiche wird also auf die Analysenbildbereiche der Wärmebilddaten übertragen. Ist die Sensorvorrichtung, mit der die Bilddaten erfasst wurden, die zur Identifikation der Erkennungsbildbereiche verwendet wurden, räumlich dicht an der Wärmebildsensorvorrichtung angeordnet und sind beide Sensorvorrichtungen gleich ausgerichtet, dann können die Erkennungsbildbereichspositionen sogar unverändert als entsprechende Analysenbildbereichspositionen übernommen werden. Sind die Sensorvorrichtungen unterschiedlich und weisen diese etwa hinsichtlich ihrer Bildwinkel, Bildfeldgrößen, Positionen und Ausrichtungen Unterschiede auf, so lassen sich statische geometrische Unterschiede vorab ermitteln und dynamische Unterschiede (etwa infolge der Anordnung von Sensorvorrichtungen an beweglichen Roboterarmen) zum jeweiligen Zeitpunkt ermitteln, so dass sich aus den Erkennungsbildbereichspositionen die jeweils räumlich korrespondierenden Analysenbildbereichspositionen geometrisch bestimmen lassen.

Gemäß einer Ausführungsform der Erfindung ist schließlich vorgesehen, dass in jeder festgelegten Analysenbildbereichsposition Wärmebilddaten automatisch analysiert werden, um den Funktionszustand von Tragrollen automatisch zu ermitteln. Im Rahmen der Analyse der Wärmebilddaten wird innerhalb jeder Analysenbildbereichsposition (entsprechend der jeweiligen Erkennungsbildbereichsposition) für jede ganz oder teilweise in den Wärmebilddaten abgebildete Tragrolle der jeweilige Funktionszustand automatisch auf der Grundlage der in den Wärmebilddaten enthaltenen Wärmeinformationen (Temperaturinformationen) von Punkten ermittelt. Dadurch, dass nicht die gesamten Wärmebilddaten eines Wärmebildes einer Analyse unterzogen werden, sondern lediglich ein kleiner, bauteilspezifischer Teil dieser Daten, wird sichergestellt, dass vor allem relevante Daten zur Ermittlung des Funktionszustands herangezogen werden, so dass dadurch überhaupt erst eine verlässliche und gleichzeitig transparente automatische Analyse mit sinnvollen Ergebnissen hoher Signifikanz möglich ist. Auch wenn das erfindungsgemäße Verfahren bei der Ermittlung des Funktionszustands einzelner Tragrollen angewendet werden kann, so bietet es besondere Vorteile bei der Ermittlung für eine Vielzahl an Tragrollen, insbesondere bei der gleichzeitigen Ermittlung der Funktionszustände von mehreren Tragrollen eines Tragrollenstuhls oder einer Tragrollengirlande sowie bei der bildübergreifenden Ermittlung des Funktionszustands einer Tragrolle, die auf mehreren Bildern dargestellt ist. Gleichermaßen ist dieses Verfahren besonders sinnvoll bei gemuldeten Fördergurten oder gerollten Fördergurten, da in derartigen Systemen die Tragrollen nur in geringem Umfang von anderen Elementen der Gurtförderanlage verdeckt sind, so dass sie für eine automatisierte Inspektion besonders leicht zugänglich sind.

Vorzugsweise weist das Verfahren etliche Schritte auf, in denen eine automatische Bewertung vorgenommen wird, beispielsweise im Rahmen einer Erkennung oder Klassifizierung. Eine solche automatische Bewertung erfolgt etwa beim automatischen Erkennen von Bilddatenbereichen (dort insbesondere bei der automatischen Identifizierung von Bilddatenbereichen, in denen erkennbare Objekte dargestellt sind, sowie bei der automatischen Zuordnung eines erkennbaren Objekts zu einer Klasse, insbesondere zu Tragrollen oder Teilbereichen von Tragrollen), bei der Analyse von Wärmebilddaten in der Analysenbildbereichsposition (dort insbesondere bei der automatischen Auswahl von Wärmebilddaten in den festgelegten Analysenbildbereichspositionen und bei der automatischen Zuordnung von ermittelten Temperaturdaten zu einem Funktionszustand), bei der automatischen Prognose von Tragrollenlebensdauern und der automatischen Erstellung von Wartungsplänen oder einer bildgestützten Positionsbestimmung. Innerhalb des erfindungsgemäßen Verfahrens können die einzelnen Schritte, in denen eine solche automatische Bewertung vorgenommen wird, grundsätzlich beliebig realisiert werden, zum Beispiel durch ein festes Regelwerk von Bewertungsbedingungen und entsprechenden Grenzwerten. Besonders vorteilhaft ist es jedoch, wenn einzelne dieser automatischen Bewertungen oder mehrere - gegebenenfalls sogar alle - automatischen Bewertungen im Rahmen von Verfahren vorgenommen werden, welche auf maschinellem Lernen (machine learning, ML) basieren, weshalb diese Ausgestaltung jeweils besonders bevorzugt wird. Als maschinelles Lernen wird ein Verfahren bezeichnet, in dem Lernalgorithmen aus erlernten Beispieldaten (Trainingsdaten) ein komplexes statistisches Modell entwickeln. Dieses Modell kann dann auf Daten angewendet werden, die von derselben Art sind wie die Beispieldaten oder von einer den Beispieldaten vergleichbaren Art, um eine automatische Bewertung zu erhalten, ohne dass dafür ein Bewertungsschema explizit programmiert wurde. Ein derartiges statistisches Modell kann etwa auf der Grundlage von künstlichen neuronalen Netzen (artificial neuronal network, ANN, KNN) gewonnen werden. Diese werden aus einer Vielzahl an Knoten gebildet, die als Schichten (Ebenen) in Datenstrukturen angeordnet sind. Während der Lernphase werden typischerweise Gewichte (Gewichtungsfaktoren) an den Verbindungen zwischen den Knoten variiert, bis Ergebnisse realisiert werden, die mit den Eingabedaten korrespondieren. Ist ein Kriterium oder Strukturelement, das als Grundlage einer Bewertung dienen kann, vorher bekannt, so wird dieses Kriterium in den Lernvorgang einbezogen und dem künstlichen neuronalen Netz vermittelt. Ein derartiges künstliches neuronales Netz kann grundsätzlich im unbemannten Fahrzeug selbst realisiert sein oder aber von diesem getrennt, etwa auf einer externen Datenverarbeitungsvorrichtung, beispielsweise einem Server oder in einer Rechnerwolke (Cloud).

Gemäß einer Ausbildung der Erfindung kann dabei das Verfahren so durchgeführt werden, dass Bilddaten von zumindest einem Teilbereich der Gurtförderanlage als Wärmebilddaten erfasst werden, indem das mindestens eine unbemannte Fahrzeug mit der wenigstens einen bildgebenden Sensorik umfassend zumindest eine Wärmebildsensorvorrichtung zum Erfassen der Wärmebilddaten entlang zumindest eines Teilbereichs der Gurtförderanlage bewegt wird, mit der bildgebenden Sensorik Bilddaten von zumindest einem Teilbereich der Gurtförderanlage erfasst werden und die Bilddaten zumindest Wärmebilddaten umfassen, in den erfassten Bilddaten der Gurtförderanlage die mindestens eine Erkennungsbildbereichsposition automatisch ermittelt wird, indem in den erfassten Bilddaten Bilddatenbereiche automatisch erkannt werden, in denen zumindest ein Teilbereich einer Tragrolle abgebildet ist, und die Position des jeweils erkannten Bilddatenbereichs als Erkennungsbildbereichsposition der jeweiligen Tragrolle automatisch bereitgestellt wird, für jede ermittelte Erkennungsbildbereichsposition aus den Bilddaten jeweils eine Analysenbildbereichsposition in den Wärmebilddaten automatisch festgelegt wird, indem für jede ermittelte Erkennungsbildbereichsposition einer Tragrolle aus den Bilddaten jeweils eine Analysenbildbereichsposition der Tragrolle in den Wärmebilddaten automatisch festgelegt wird, die mit der jeweiligen Erkennungsbildbereichsposition aus den Bilddaten räumlich korrespondiert, in jeder festgelegten Analysenbildbereichsposition die Wärmebilddaten automatisch analysiert werden, indem in der festgelegten Analysenbildbereichsposition der Tragrolle aus den Wärmebilddaten Temperaturdaten der jeweiligen Tragrolle automatisch ermittelt werden und die aus der Analysenbildbereichsposition ermittelten Temperaturdaten automatisch einem Funktionszustand der jeweiligen Tragrollen zugeordnet werden.

Dabei wird also in den erfassten Bilddaten der Gurtförderanlage die mindestens eine Erkennungsbildbereichsposition automatisch ermittelt, indem in den erfassten Bilddaten zunächst Bilddatenbereiche automatisch erkannt werden, in denen zumindest ein Teilbereich einer Tragrolle abgebildet ist. Anschließend wird die Position des jeweils erkannten Bilddatenbereichs als Erkennungsbildbereichsposition der jeweils erkannten Tragrolle automatisch bereitgestellt. Eine derartige automatische Bilddatenbereichserkennung kann beispielsweise nach dem Prinzip der zuvor allgemein beschriebenen Mustererkennung erfolgen. Die bei anderen Erkennungsverfahren wie etwa einem Bildvergleich mit historischen Vergleichsbilddaten auftretende Empfindlichkeit gegenüber Änderungen in den Bilderfassungsbedingungen (etwa aufgrund wechselnder Beleuchtungsverhältnisse, geänderter Aufnahmepositionen oder temporärem Verdecken) lässt sich so verringern und die Verlässlichkeit und Transparenz der Ermittlung des Funktionszustands dadurch weiter steigern.

Für jede ermittelte Erkennungsbildbereichsposition einer Tragrolle aus den Bilddaten wird jeweils eine Analysenbildbereichsposition der Tragrolle in den Wärmebilddaten automatisch festgelegt, die mit der jeweiligen Erkennungsbildbereichsposition aus den Bilddaten räumlich korrespondiert. Befindet sich die Sensorvorrichtung, mit der die Bilddaten erfasst wurden, die der Ermittlung der Erkennungsbildbereiche zugrunde liegen, nahe an der Wärmebildsensorvorrichtung und sind beide Sensorvorrichtungen vergleichbar ausgerichtet, dann korrespondiert die Erkennungsbildbereichsposition dergestalt räumlich mit der jeweiligen Analysenbildbereichsposition, dass beide Positionen innerhalb der jeweiligen Bilddaten räumlich identisch sind; bei gleicher Darstellung (etwa hinsichtlich Öffnungswinkel, Bildpunktauflösung und Darstellungsbereichsgröße der Bilddaten) bedeutet dies, dass die Erkennungsbildbereichsposition unmittelbar als die jeweilige Analysenbildbereichsposition übernommen werden kann, bei Abweichungen in der Darstellung sind zur Koordinatentransformation zusätzlich entsprechende Umrechnungen erforderlich. Liegen die beiden Sensorvorrichtungen voneinander beabstandet vor und/oder unterscheiden sich die Betrachtungswinkel, sind weitere geometrische Umrechnungen zur Anpassung statischer und/oder dynamischer Unterschiede erforderlich, etwa ein Parallaxenausgleich, um aus einer Erkennungsbildbereichsposition in den Bilddaten die entsprechende räumlich korrespondierende Analysenbildbereichsposition in den Wärmebilddaten zu ermitteln und festzulegen. Auch hier kann es einen zusätzlichen Effizienzgewinn und damit eine verbesserte Ressourcennutzung mit sich bringen, darauf zu verzichten, andere Zielobjekte als Tragrollen zu identifizieren.

Bei der Analyse der Wärmebilddaten werden schließlich in der festgelegten Analysenbildbereichsposition der Tragrolle aus den Wärmebilddaten Temperaturdaten der jeweiligen Tragrolle automatisch ermittelt und die aus der Analysenbildbereichsposition ermittelten Temperaturdaten automatisch einem Funktionszustand der jeweiligen Tragrollen zugeordnet. Die Temperaturdaten (Thermaldaten) der Tragrollen können etwa die ortsaufgelösten lokalen Oberflächentemperaturen der Tragrollen und insbesondere von deren Lagern sein, aber auch daraus statistisch abgeleitete charakteristische Temperaturkenngrößen der jeweiligen Tragrolle, die den aktuellen Wärmezustand repräsentieren, etwa Minimalwerte, Maximalwerte, Mittelwerte, Zentralwerte (Mediane), lokale Häufungswerte sowie Parameter der Temperaturverteilungen, vor allem deren Breite, Streuungsmaße und Symmetrie. Auf der Grundlage der Oberflächentemperaturen und/oder der charakteristischen Temperaturkenngrößen einer Tragrolle oder eines Teilbereichs einer Tragrolle wird der Funktionszustand (Funktionsstatus) der jeweiligen Tragrolle ermittelt und dieser Tragrolle zugeordnet.

Wie bereits ausgeführt, können einzelne, mehrere oder alle automatischen Bewertungen (Erkennungsschritte) im Rahmen von Verfahrens vorgenommen werden, welche auf maschinellem Lernen basieren. Gemäß einer weiteren Ausbildung der Erfindung hat es sich ferner als günstig herausgestellt, wenn das Verfahren so durchgeführt wird, dass die Erkennungsgüte bei der automatischen Ermittlung der Erkennungsbildbereichsposition in den erfassten Bilddaten, insbesondere die Erkennungsgüte der automatischen Erkennung von Bilddatenbereichen, in denen zumindest ein erkennbares Objekt abgebildet ist, insbesondere zumindest ein Teilbereich einer Tragrolle, und/oder die Erkennungsgüte der automatischen Erkennung von Tragrollen oder Teilbereichen von Tragrollen in den erkannten Bilddatenbereichen, anhand eines mittels eines künstlichen neuronalen Netzes durchgeführten Lernverfahrens verbessert wird, insbesondere mittels eines einstufigen oder mehrstufigen Convolutional Neural Networks. Demzufolge kann also bei der automatischen Ermittlung der Erkennungsbildbereichsposition in den erfassten Bilddaten die Erkennungsgüte anhand eines Lernverfahrens verbessert werden, welches mittels eines künstlichen neuronalen Netzes durchgeführt wird. Die Ermittlung der Erkennungsbildbereichsposition in den erfassten Bilddaten beinhaltet dabei mindestens einen Erkennungsschritt, der mittels eines künstlichen neuronalen Netzes durchgeführt wird. Dies kann insbesondere eine automatische Erkennung von Bilddatenbereichen sein, in denen zumindest ein erkennbares Objekt abgebildet ist (insbesondere eine Tragrolle oder zumindest ein Teilbereich einer Tragrolle), oder eine automatische Erkennung von Tragrollen oder Teilbereichen von Tragrollen in den erkannten Bilddatenbereichen. Die Erkennungsgüte ist ein statistisches Maß für die Genauigkeit des Erkennungsvorgangs und stellt den Anteil der zutreffend erkannten Erkennungen an der Gesamtzahl insgesamt durchgeführter Erkennungen dar: Je besser die Erkennung ist, desto höher (und damit besser) ist die Erkennungsgüte. Besonders vorteilhaft ist es, wenn das Lernverfahren mittels eines einstufigen oder mehrstufigen Convolutional Neural Networks durchgeführt wird. Ein Convolutional Neural Network (CNN; faltendes neuronales Netz) ist ein künstliches neuronales Netz, das in der Lage ist, als Matrix dargestellte Eingabedaten zu verarbeiten. Es weist beispielsweise eine Filterebene (Filterschicht, Convolutional Layer) mit einem oder mehreren Filtern (typischerweise 16 oder 32 Filtern) zur Analyse der als Matrix eingegebenen Daten im Rahmen einer diskreten Faltung auf, deren Ausgabe ebenfalls eine Matrixform aufweist. Die Ausgabedaten dieser Filterebene können als Eingabedaten für eine gegebenenfalls nachfolgende weitere Filterebene dienen, gefolgt von einer Aggregationsebene (Aggregationsschicht, Pooling Layer) zur Weitergabe des jeweils repräsentativsten Signals an die folgenden Ebenen. Dieser Aufbau kann gegebenenfalls mehrfach wiederholt werden, abgeschlossen wird das Netzwerk von mindestens einer Ebene mit der Struktur eines regulären neuronalen Netzes (Fullyconnected Layer), welche mit einer Ausgabeebene verbunden ist. Das Convolutional Neural Network kann dabei einstufig oder mehrstufig sein, also lediglich eine Ebene trainierbarer Gewichte aufweisen oder aber mehrere Ebenen trainierbarer Gewichte.

Das Verfahren kann gemäß einer weiteren Ausbildung der Erfindung weiterhin so durchgeführt werden, dass in jeder festgelegten Analysenbildbereichsposition Wärmebilddaten automatisch analysiert werden, indem in den festgelegten Analysenbildbereichspositionen Wärmebilddaten automatisch ausgewählt werden, die Wärmebilddaten der Tragrollen sind, und in den festgelegten Analysenbildbereichspositionen die ausgewählten Wärmedaten automatisch analysiert werden. Dabei werden innerhalb der festgelegten Analysenbildbereichspositionen Wärmebilddaten automatisch ausgewählt, die Wärmebilddaten der Tragrollen sind. In den festgelegten Analysenbildbereichspositionen werden anschließend die ausgewählten Wärmedaten automatisch analysiert. Damit wird die Analyse der Wärmebilddaten innerhalb der Analysenbildbereichspositionen auf solche Wärmebilddaten beschränkt, die vor allem von einer Tragrolle stammen, und solche Wärmebilddaten nicht analysiert, die zwar in den Analysenbildbereichspositionen liegen, jedoch nicht von der Oberfläche der Tragrolle stammen, somit auch keine Wärmebilddaten der Tragrolle sind und daher keine Information zu deren Funktionszustand bieten. Die automatische Auswahl derjenigen Wärmebilddaten aus den Analysenbildbereichspositionen, die jeweils auf Tragrollen oder deren Teilbereiche zurückzuführen sind, kann dabei etwa in Verfahren erfolgen, die auf einem festen Regelschema basieren oder auf einem maschinellen Lernen. Auf diese Weise lässt sich die bei der Analyse zu berücksichtigende Datenmenge weiter verringern, wodurch nicht nur der Aufwand bei der Ermittlung des Funktionszustands verringert wird, sondern darüber hinaus die Qualität bei der Ermittlung des Funktionszustands wie auch die Transparenz der Ermittlung insgesamt verbessert wird.

Hierbei ist es gemäß einer weiteren Ausbildung der Erfindung möglich, dass Wärmebilddaten automatisch ausgewählt werden, die in solchen Teilbereichen innerhalb der festgelegten Analysenbildbereichspositionen liegen, in denen Wärmebilddaten in kreisartigen oder kreisähnlichen Konturen angeordnet sind und/oder in denen Wärmebilddaten den Temperaturen eines gleichen Temperaturniveaus entsprechen. Die Wärmedaten in den automatisch ausgewählten Teilbereichen stellen dabei die Wärmedaten von Tragrollen und insbesondere von deren Lagern dar und werden anschließend automatisch analysiert. Hierbei können als Teilbereiche also Wärmebilddaten automatisch ausgewählt werden, die innerhalb der festgelegten Analysenbildbereichspositionen liegen (und somit innerhalb der jeweiligen festgelegten Analysenbildbereiche) und in denen die Wärmebilddaten eine Anordnung in kreisartigen oder kreisähnlichen Konturen aufweist. Die Wärmedaten sind insbesondere dann in kreisartigen oder kreisähnlichen Konturen angeordnet, wenn in den Wärmedaten die Messgrößen (beispielsweise die Intensitätswerte, welche Oberflächentemperaturen repräsentieren) eine räumliche Verteilung aufweisen, die eine Form besitzen, die von einem Kreis oder von einem perspektivisch verzerrten Kreis (beispielsweise einem Oval, insbesondere einer Ellipse) abgeleitet ist, was Teilbereiche davon einschließt (beispielsweise einen Kreisbogen, einen Teilkreis, ein Kreissegment, einen Ring, einen Teilring, einen Ringabschnitt, ein Teiloval, eine Teilellipse und dergleichen); dies beinhaltet natürlich ebenfalls kreisförmige Konturen. Derartige kreisartige oder kreisähnliche Konturen können vor allem konzentrisch oder konfokal ausgebildet sein. Dabei wird der Bildbereich (Analysenbildbereich) innerhalb jeder Analysenbildbereichsposition auf kreisförmige Konturen untersucht und eine Auswahl etwa für solche Teilbereiche getroffen, die den Durchschnitt aller kreisartigen oder kreisähnlichen Konturen darstellen oder deren Mittelpunkte oder Brennpunkte identisch sind oder nahe (das heißt in einem hinreichend kleinen Abstand voneinander) beieinanderliegen.

Desgleichen können Wärmebilddaten automatisch ausgewählt werden, die innerhalb der festgelegten Analysenbildbereichspositionen liegen und in denen Wärmebilddaten den Temperaturen eines gleichen Temperaturniveaus entsprechen. Die der sensorischen Erfassung der Wärmebilddaten zugrundeliegende Messgröße ist die Temperatur (Oberflächentemperatur) des abgebildeten Objekts. Entsprechen dabei die Wärmebilddaten in Teilbereichen des Analysenbildbereichs Temperaturen oberhalb oder unterhalb bestimmter Temperaturgrenzwerte oder Temperaturen aus einem von einem Temperaturgrenzwertpaar definierten Temperaturintervall, so entsprechen diese Wärmebilddaten Temperaturen desselben Temperaturniveaus. Dabei können die Wärmebilddaten aus dem gleichen Temperaturniveau insbesondere auch in räumlich zusammenhängenden Bereichen angeordnet sein. Die jeweiligen Temperaturgrenzwerte werden vorher festgelegt. Bei einer typischen maximalen Betriebstemperatur der Oberfläche von Tragrollen (insbesondere deren Lagern) einer Gurtförderanlage von 70 °C kann beispielsweise für Temperaturen aus einem Bereich von mehr als 70 °C bis höchstens 80 °C eine Überwachung der Tragrolle in kurzen Zeitintervallen vorgesehen sein, für Temperaturen aus einem Bereich von mehr als 80 °C bis höchstens 90 °C ein Auswechseln der Tragrolle geplant werden und für Temperaturen aus einem Bereich von mehr als 90 °C das sofortige Auswechseln der Tragrolle vorgesehen sein. Wenn lediglich Tragrollen in einem potenziell kritischen Funktionszustand überwacht werden sollen, dann können bei dieser Konstellation Temperaturintervalle etwa so festgelegt werden, dass lediglich Temperaturen einer Temperatur von mehr als 70 °C ausgewählt werden. Wird hingegen auch für Tragrollen mit ordnungsgemäßem Funktionszustand eine Dokumentation der Temperaturdaten gewünscht, können die Temperaturdaten für alle Bereiche ermittelt werden und lediglich in relevanten oder potenziell interessanten Temperaturbereichen einer weitergehenden Analyse unterzogen werden. So ist es etwa möglich, lediglich die Wärmebilddaten aus dem höchsten gemessenen Temperaturintervall der weitergehenden Analyse zuzuführen - also etwa Wärmebilddaten von Temperaturen von mehr als 90 °C; sollten diese hohen Wärmebilddaten nicht existieren, dann können Wärmebilddaten aus einem Temperaturintervall von mehr als 80 °C bis höchstens 90 °C analysiert werden, falls diese ebenfalls nicht existieren Wärmebilddaten aus einem Temperaturintervall von mehr als 70 °C bis höchstens 80 °C und nur wenn auch diese nicht existieren. alle Wärmebilddaten.

Gemäß der beiden beschriebenen Varianten kann eine Auswahl auf der Grundlage eines Schemas fester Regeln getroffen werden, bevorzugt jedoch in einem Verfahren, das auf maschinellem Lernen beruht. Die Varianten sind alternativ einzusetzen, lassen sich zur Steigerung der Erkennungsqualität aber auch kombiniert durchführen. In diesem Fall werden etwa in den festgelegten Analysenbildbereichspositionen die Teilbereiche, in denen Wärmebilddaten den Temperaturen eines gleichen Temperaturniveaus entsprechen, hinsichtlich Form und Ausdehnung verglichen mit den Teilbereichen, in denen Wärmebilddaten in kreisartigen oder kreisähnlichen Konturen angeordnet sind. Die letztendlich automatisch ausgewählten Wärmebilddaten sind dann die Wärmebilddaten eines Bereichs, der sich als gemeinsame Schnittmenge (Schnittfläche) der beiden Teilbereiche aus den unterschiedlichen Varianten ergibt.

Dabei kann gemäß einer weiteren Ausbildung der Erfindung die Erkennungsgüte bei der automatischen Auswahl der Wärmebilddaten, die Wärmebilddaten der Tragrollen sind, anhand eines mittels eines künstlichen neuronalen Netzes durchgeführten Lernverfahrens verbessert werden, insbesondere die Erkennungsgüte bei der automatischen Auswahl der Wärmebilddaten, die in solchen Teilbereichen innerhalb der festgelegten Analysenbildbereichspositionen liegen, in denen Wärmebilddaten in kreisartigen oder kreisähnlichen Konturen angeordnet sind und/oder in denen Wärmebilddaten den Temperaturen eines gleichen Temperaturniveaus entsprechen.

Demzufolge werden die automatischen Bewertungen, auf denen die automatische Auswahl der Wärmebilddaten beruht, die Wärmebilddaten der Tragrollen sind, also im Rahmen von Verfahren vorgenommen werden, welche auf maschinellem Lernen beruhen, wobei die Erkennungsgüte dieser Bewertung in Lernverfahren verbessert wird, die mittels eines künstlichen neuronalen Netzes durchgeführt werden. Es kann sich dabei insbesondere um Bewertungen handeln, die im Zusammenhang mit der automatischen Auswahl von Wärmebilddaten stehen, die in kreisartigen oder kreisähnlichen Konturen angeordnet sind und/oder den Temperaturen eines gleichen Temperaturniveaus entsprechen.

Gemäß einer weiteren Ausbildung der Erfindung kann das Verfahren so durchgeführt werden, dass die Bilddaten der Gurtförderanlage jeweils einer Position in der Gurtförderanlage zugeordnet werden und/oder für festgelegte Analysenbildbereichspositionen die Wärmebilddaten oder Auswertungsinformationen jeweils einer individuellen Tragrolle der Gurtförderanlage zugeordnet werden, wobei die Zuordnung insbesondere über eine Funk-basierte Positionsbestimmung, über einen Abgleich von erfassten Bilddaten mit Vergleichsbilddaten, über eine Wegstreckenerfassung des unbemannten Fahrzeugs und/oder über eine Ausrichtungserfassung der bildgebenden Sensorik vorgenommen wird. Eine solche Zuordnung ermöglicht eine eindeutige Identifikation des in den Bilddaten dargestellten Objektes. Demzufolge können die Bilddaten der Gurtförderanlage, also die Wärmebilddaten, die Lichtbilddaten und gegebenenfalls andere Bilddaten, jeweils einer Position als Ortsposition in der Gurtförderanlage zugeordnet werden. Eine Ortsposition (Standort) ist ein durch Koordinaten eindeutig festgelegter Punkt im Raum, also etwa durch geographische Koordinaten, durch eine relative Positionsangabe innerhalb der Gurtförderanlage oder durch den vom Fahrzeug zurückgelegten Weg. Die den Bilddaten zugeordnete Ortsposition kann dabei der Standort der in den Bilddaten dargestellten Objekte, der Standort des unbemannten Fahrzeugs, der Standort der Bildsensorvorrichtung, mittels welcher die Bilddaten erfasst wurden, oder der Standort eines anderen festgelegten Referenzpunktes sein. Stattdessen oder zusätzlich können für festgelegte Analysenbildbereichspositionen die Wärmebilddaten oder Auswertungsinformationen jeweils einer individuellen Tragrolle der Gurtförderanlage zugeordnet werden. Eine derartige Zuordnung ist vergleichbar mit der zuvor beschriebenen relativen Positionsangabe.

Zur Zuordnung der Position muss also die entsprechende Ortsposition ermittelt werden. Aus einer exakten Ortsposition lässt sich - gegebenenfalls unter Einbeziehung einer Blickrichtung - die jeweilige Tragrolle in der Regel eindeutig identifizieren. Die Bestimmung der Ortsposition kann insbesondere in einer Funk-basierten Positionsbestimmung, über einen Abgleich von erfassten Bilddaten mit Vergleichsbilddaten, über eine Wegstreckenerfassung des unbemannten Fahrzeugs und/oder über eine Ausrichtungserfassung der bildgebenden Sensorik erfolgen. Eine Funk-basierte Positionsbestimmung kann beispielsweise über ein Navigationssatellitensystem wie GPS oder Galileo erfolgen, über ein terrestrisches Funknavigationssystem wie Decca oder Loran, über ein Kurzstreckennavigationssystem oder über ein Nahbereichstranspondersystem wie etwa RFID-Transpondern an den Tragrollenstationen. Eine Wegstreckenerfassung des unbemannten Fahrzeugs kann beispielsweise über eine exakte Spurverfolgung (Tracking) der vom Fahrzeug zurückgelegten Wegstrecke sowie aller Richtungsänderungen erfolgen, wenn mindestens ein Punkt der Wegstrecke als Teilreferenz bekannt ist, etwa der Startpunkt, der Endpunkt oder ein Wegpunkt zwischendurch. Eine Ausrichtungserfassung der bildgebenden Sensorik kann beispielsweise über einen elektronischen Kompass (Magnetometer) oder eine inertiale Messeinheit (inertial measurement unit, IMU) mit Inertialsensoren (Trägheitssensoren) am oder im Fahrzeug (einschließlich dessen Sensorik) erfolgen, mittels welcher etwa Beschleunigungen und Drehraten erfasst werden können, in Verbindung mit einer Zeiterfassung; stattdessen ist auch eine zeitbasierte kontinuierliche Bilddatenerfassung möglich (etwa als Serienbild, Film oder Daueraufnahme), in welcher eine Ausrichtungsermittlung auf der Grundlage der Zeitstempel und den abgebildeten Richtungsänderungen vorgenommen werden kann.

Ein Abgleich von erfassten Bilddaten mit Vergleichsbilddaten kann beispielsweise auf der Grundlage der mittels der Sensorik erfassten Wärmebilddaten oder Lichtbilddaten erfolgen (jeweils alleine oder in Kombination miteinander); diese können als Einzelbilder, Bilderfolgen oder Bewegtbilder monoskopisch oder stereoskopisch aufgezeichnet werden. Stattdessen können derartige Bilddaten aber auch von separaten Vorrichtungen erfasst werden, etwa als Abstandsdaten aus abrasternden Verfahren wie Laserscanning (einschließlich Laserscanner mit Wärmebildkameras), Lidar / Ladar, Sonar oder Radar. Zum Abgleich werden diese Bilddaten mit Vergleichsdaten verglichen, etwa mit vorher erfassten Vergleichsbilddaten oder einem vorher erstellten räumlichen (dreidimensionalen) digitalen Modell der Gurtförderanlage und deren Umgebung, welches beispielsweise als dreidimensionale Punktwolke vorliegen kann. Der Vergleich kann unter Verwendung eines festen Regelsatzes oder auch im Rahmen eines maschinellen Lernens realisiert sein.

Mitunter kann die Ortsgenauigkeit von Einzelverfahren nicht hinreichend sein, um eine eindeutige Identifikation einer abgebildeten Tragrolle zu erlauben. Dies kann etwa bei herkömmlichen GPS-Systemen der Fall sein (eine höhere Ortsauflösung bieten etwa differentielle GPS-Systeme). In diesem Fall ist es sinnvoll, mehrere Verfahren zum Ermitteln der Position nebeneinander einzusetzen, etwa zusätzlich zu einem GPS-System auch ein Kompasssystem zu nutzen, beispielsweise auf der Grundlage kalibrierter Inertialsensoren, um die erforderliche Genauigkeit zu gewährleisten.

Das Verfahren kann gemäß einer weiteren Ausbildung der Erfindung darüber hinaus so durchgeführt werden, dass die aus der Analysenbildbereichsposition ermittelten Temperaturdaten automatisch einem Funktionszustand einer Tragrolle zugeordnet werden, indem die ermittelten Temperaturdaten der jeweiligen Tragrolle entweder automatisch in jeweils einen Funktionszustand aus einer Vielzahl an vorher festgelegten Funktionszuständen klassifiziert werden oder jeweils einem Funktionszustand im Rahmen einer Clusteranalyse zugeordnet werden, insbesondere im Rahmen einer multivariaten Clusteranalyse. Demzufolge können die für eine Tragrolle ermittelten Temperaturdaten automatisch in jeweils einen einzigen Funktionszustand klassifiziert werden, wobei dieser eine Funktionszustand aus einer Vielzahl an vorher festgelegten Funktionszuständen stammt. Die Klassen zur Klassifizierung sind vorab entsprechend den Erfordernissen der konkreten Gurtförderanlage festzulegen; im einfachsten Fall sind dies zwei Klassen, nämlich eine für Tragrollen, bei denen ein Funktionsversagen bereits eingetreten ist (also für eine defekte Tragrolle bei vollständiger Funktionsbeeinträchtigung), und eine für Tragrollen, bei denen noch kein Funktionsversagen eingetreten ist. Eine andere binäre (duale) Klassifizierung könnte eine Klasse für Tragrollen beinhalten, bei denen noch keine Funktionsbeeinträchtigung aufgetreten ist, sowie eine Klasse für Tragrollen, bei denen bereits eine Funktionsbeeinträchtigung aufgetreten ist (ohne zu unterscheiden, ob die Funktionsbeeinträchtigung lediglich gering ist oder ob es bereits zu einem Funktionsversagen gekommen ist). Eine sinnvollere Differenzierung gestattet eine ternäre Klassifizierung (entsprechend etwa einer Einteilung "gut", "mittel" "schlecht" oder "unverschlissen", "teilverschlissen" und "verschlissen"), bei welcher unterschieden wird zwischen Tragrollen, bei denen noch keine Funktionsbeeinträchtigung aufgetreten ist, Tragrollen, bei denen zwar bereits eine Funktionsbeeinträchtigung aber noch kein Funktionsversagen eingetreten ist, und Tragrollen, bei denen bereits ein Funktionsversagen eingetreten ist. Darüber hinaus kann die Klassifizierung auch zusätzliche Klassen umfassen, wobei insbesondere eine weitere Differenzierung der mittleren der drei Klassen als sinnvoll erscheint, um unterschiedliche Verschleißzustände abzubilden und unterschiedliche Punkte für einen Austausch erkennen zu lassen, beispielsweise eine Klassifikation mit insgesamt vier Klassen, fünf Klassen, sechs Klassen oder mehr Klassen. Statt einer Klassifizierung kann zu Zuordnung auch als Clusteranalyse (Ballungsanalyse) durchgeführt werden, also als Verfahren zum Zusammenfassen (Bündelung, Clustering) von Daten zu verschiedenen homogenen Gruppen (Clustern) auf der Grundlage von Ähnlichkeitsstrukturen, die im Verlauf des Verfahrens in den Datenbeständen entdeckt werden. Eine Clusteranalyse ist ein strukturentdeckendes Verfahren, so dass eine vorherige Festlegung einzelner Klassen nicht erforderlich ist. Optional kann die Clusteranalyse als multivariate Clusteranalyse ausgestaltet sein und somit von mehr als einer Variablen abhängen. Auch für Bewertungen, die im Rahmen einer derartigen Zuordnung vorgenommen werden, insbesondere im Rahmen einer Clusteranalyse, ist es sinnvoll, auf Verfahren zurückzugreifen, die auf einem maschinellen Lernen beruhen.

Gemäß einer weiteren Ausbildung der Erfindung kann es dabei vorteilhaft sein, wenn das Verfahren so durchgeführt wird, dass in jeder festgelegten Analysenbildbereichsposition die Wärmebilddaten automatisch analysiert werden, indem in der festgelegten Analysenbildbereichsposition der Tragrolle aus den Wärmebilddaten Temperaturdaten als charakteristische Temperaturkenngrößen der jeweiligen Tragrolle automatisch ermittelt werden, wobei die charakteristischen Temperaturkenngrößen der Wärmebilddaten in den festgelegten Analysenbildbereichspositionen insbesondere Minimalwerte, Maximalwerte, Mittelwerte, Zentralwerte, lokale Häufungswerte sowie Parameter der Temperaturverteilungen, vor allem deren Breiten, Streuungsmaße und Symmetrien sind. Die charakteristischen Temperaturkenngrößen sind Kenngrößen, die von der Temperatur abgeleitet sind und den aktuellen Zustand einer Tragrolle charakterisieren; typischerweise handelt es sich dabei um Kenngrößen, die im Rahmen einer statistischen Analyse der lokalen Temperaturen erhalten werden. Sofern die Wärmebilddaten nicht die Oberflächentemperatur unmittelbar enthalten, kann diese zunächst aus den jeweiligen Wärmebilddaten errechnet werden, bevor die statistische Analyse der Temperaturen durchgeführt wird.

Insbesondere ist es gemäß einer weiteren Ausbildung der Erfindung dabei von Vorteil, wenn das Verfahren so durchgeführt wird, dass die Erkennungsgüte bei der automatischen Ermittlung des Funktionszustands von Tragrollen, insbesondere die Klassifizierung der Wärmebilddaten, anhand eines mittels eines künstlichen neuronalen Netzes durchgeführten Lernverfahrens verbessert wird. Auch wenn die automatische Ermittlung des Funktionszustands grundsätzlich in beliebigen geeigneten Verfahren erfolgen kann, also auch auf der Grundlage eines Schemas fester Regeln, so gelangen für die automatische Ermittlung des Funktionszustands bevorzugt Verfahren zum Einsatz, die auf maschinellem Lernen beruhen. Demzufolge werden die automatischen Bewertungen, auf denen die automatische Ermittlung des Funktionszustands von Tragrollen beruht, also im Rahmen von Verfahren vorgenommen, welche auf maschinellem Lernen beruhen, wobei die Erkennungsgüte dieser Bewertung in Lernverfahren verbessert wird, die mittels eines künstlichen neuronalen Netzes durchgeführt werden. Es kann sich dabei insbesondere um Bewertungen handeln, die im Zusammenhang mit der Klassifizierung der Wärmebilddaten stehen.

Gemäß einer weiteren Ausbildung der Erfindung kann darüber hinaus das Verfahren so durchgeführt werden, dass für die jeweilige Tragrolle der Funktionszustand, die Bilddaten und/oder gegebenenfalls die ermittelten Temperaturdaten in einer Funktionszustandsdatensammlung aufgenommen werden. Dabei wird eine Funktionszustandsdatensammlung erhalten, die den aktuellen Funktionszustand einer Tragrolle enthält, vorzugsweise die Funktionszustände aller Tragrollen einer Gurtförderanlage. Eine solche Funktionszustandsdatensammlung kann beispielsweise in Form einer Datenbank vorliegen. Derartige Funktionszustandsdatensammlungen mit Funktionszuständen, Bilddaten und/oder Temperaturdaten (einschließlich charakteristischer Temperaturkenngrößen) können etwa Dokumentationszwecken dienen.

Zusätzlich zu den aktuellen Daten kann eine derartige Funktionszustandsdatensammlung auch historische Daten enthalten, die vergangene Funktionszustände darstellen. In dieser Form kann Sie auch als Grundlage für die Erstellung von Prognosen zur zeitlichen Entwicklung des Funktionszustands von Tragrollen herangezogen werden. Das Speichern der entsprechenden Daten kann dabei in einer Speichervorrichtung vorgenommen werden, die sich auf dem unbemannten Fahrzeug befindet, oder aber in einer externen Speichervorrichtung, die sich außerhalb des unbemannten Fahrzeugs befindet, etwa in einer Datenverarbeitungsvorrichtung wie beispielsweise einem Server. Im Falle eines externen Speicherns können die Daten zur externen Datenvorrichtung kurz nach Erfassen der Bilddaten (etwa in Echtzeit oder zeitlich versetzt), während des weiteren Verlaufs der Inspektionsfahrt des unbemannten Fahrzeugs oder aber erst nach Beendigung der Inspektionsfahrt übertragen werden, etwa von einer Basisstation (Servicestation) aus, in der sich das Fahrzeug zwischen zwei Inspektionsfahrten befindet. Dabei werden zu Dokumentationszwecken insbesondere die Lichtbilddaten in Form von Lichtbildaufnahmen (Lichtbildern, Fotografien, RGB-Bildern, insbesondere Digitalfotografien) sowie die Wärmebilddaten in Form von Wärmebildaufnahmen (Wärmebilder, Thermografien, Thermalbilder, Thermobilder, insbesondere digitale Wärmefotografien) gespeichert, wobei Positionsinformationen und Wegstreckeninformationen separat gespeichert werden oder als Metainformation in den entsprechenden Bilddaten enthalten sein können.

Die in einer solchen Funktionszustandsdatensammlung enthaltenen Daten können vom Betreiber oder vom Wartungspersonal abgerufen werden, etwa in Textform oder als Bilddarstellung. Auf diese Weise lässt sich einfach ein Überblick erhalten über unterschiedliche Zustandsinformationen, beispielsweise eine detaillierte Aufstellung aller Tragrollen einschließlich individueller Kommentare und der Wartungsgeschichte, detaillierte Informationen zur Temperatur individueller Tragrollen, Geoinformationen zur schnellen Lokalisierung von beschädigten Tragrollen, Übersichten für alle Tragrollen zu bislang eingetretenem Verschleiß und Funktionsversagen sowie zu prognostiziertem Verschleiß und Ausfallverhalten. Diese Informationen zu Tragrollenzustand und Wartungshistorie lassen sich gegebenenfalls manuell ergänzen.

Ferner kann es gemäß einer weiteren Ausbildung der Erfindung sinnvoll sein, wenn das Verfahren so durchgeführt wird, dass in dem Fall, dass bei der automatischen Ermittlung der Erkennungsbildbereichsposition eine Erkennungsposition für eine individuelle Tragrolle nicht erkannt wird oder bei der Analyse der Wärmebilddaten Temperaturdaten ermittelt werden, die eine Ermittlung des Funktionszustands nicht ermöglichen, ein Anforderungsbefehl an das unbemannte Fahrzeug übermittelt wird, um erneut Bilddaten in dem Bereich der Gurtförderanlage zu erfassen, in der sich die individuelle Tragrolle befindet. Auf diese Weise kann bei einer Fehlerfassung oder bei einer gestörten Erfassung die erneute Erfassung von Bilddaten veranlasst werden, um für die Tragrollen einen vollständigen Satz analysierbarer Daten zu erhalten. Dabei kann die Erfassung von Bilddaten auf solche Tragrollen beschränkt werden, für die entsprechende Daten nicht vorliegen. Dasselbe Vorgehen kann bei einem Notfall oder Störfall zur individuellen Ursachenprüfung der im Betriebsablauf aufgetretenen Unregelmäßigkeiten eingesetzt werden.

Die Erfindung beinhaltet weiterhin ein Verfahren zur Identifikation von funktionsbeeinträchtigten Tragrollen einer Gurtförderanlage während des Betriebs der Gurtförderanlage, das Verfahren umfassend das zuvor beschriebene Verfahren zum maschinellen Ermitteln des Funktionszustands von Tragrollen einer Gurtförderanlage, wobei funktionsbeeinträchtigte Tragrollen erkannt werden, anhand eines Vergleichs mit historischen Daten aus einer Funktionszustandsdatenbank ein Zeitpunkt für einen Austausch der jeweiligen Tragrolle ermittelt wird und für diese Tragrolle der ermittelte Zeitpunkt an eine Kommunikationsschnittstelle ausgegeben wird. In einem derartigen Verfahren werden Tragrollen einer Gurtförderanlage identifiziert, die funktionsbeeinträchtigt sind, die also bereits ausgefallen sind oder aber in einem absehbaren Zeitraum voraussichtlich ausfallen werden. Der wesentliche Schritt dieses Verfahrens ist das zuvor beschriebene Verfahren zum maschinellen Ermitteln des Funktionszustands von Tragrollen, bei welchem funktionsbeeinträchtigte Tragrollen erkannt werden. Die aktuell aufgenommenen Daten werden mit historischen Daten aus einer Funktionszustandsdatenbank verglichen und es wird ein optimaler Zeitpunkt für den Austausch der jeweiligen Tragrollen ermittelt. Um einen optimalen Zeitpunkt zu ermitteln, wird eine Prognose des zu erwartenden Totalausfalls einer Tragrolle ebenso berücksichtigt wie anlagenspezifische Umstände, beispielsweise Wartungszeiträume und dergleichen. Eine Prognose kann sich zum Beispiel unter Berücksichtigung der historischen Daten erhalten lassen, indem etwa der historische Verlauf der Temperatur einer Tragrolle auf eine festgelegte kritische Maximaltemperatur extrapoliert wird (etwa im Rahmen einer Regressionsanalyse), bei welcher ein Totalausfall zu erwarten ist, beispielsweise auf eine Temperatur von 90 °C. Der Austausch dieser Tragrolle kann dann automatisch im Rahmen derjenigen regulär terminierten Wartungsmaßnahme durchgeführt werden, die kurz vor dem Zeitpunkt stattfindet, an welchem kritische Maximaltemperatur voraussichtlich erreicht wird. Auch für im Rahmen einer derartigen Prognose vorzunehmende Bewertungen ist es sinnvoll, auf Verfahren zurückzugreifen, die auf einem maschinellen Lernen beruhen. Auf der Grundlage solcher Analysen kann etwa ein effizienzoptimiertes Wartungsschema für die gesamte Gurtförderanlage erstellt werden, in der die Standzeiten und Wartungskosten minimiert und die Austauschintervalle maximiert werden. Der so ermittelte Zeitpunkt wird an eine Kommunikationsschnittstelle ausgegeben, beispielsweise als visuelle Information auf einem Anzeigegerät angezeigt, als E-Mail an ein vorher definiertes E-Mailkonto versandt, als Betriebshinweis einem System zur Anlagensteuerung und Anlagenüberwachung zugeführt oder als automatisch erstellter Kalendereintrag in Terminverwaltungsprogrammen eingefügt. Darüber hinaus lassen sich auch weitere Maßnahmen veranlassen, es können etwa erforderliche Servicetechniker automatisch angefordert oder nicht vorrätige benötigte Ersatzteile automatisch bestellt werden.

Damit kann zusätzlich zu einer Detektion von Anomalien und aktuellem Verschleiß von Tragrollen im Rahmen einer Inspektion und Überwachung also auch zukünftiges Verhalten prognostiziert werden, beispielsweise für eine vorausschauende Wartung (prädiktive Instandhaltung, predictive maintenance) oder bei der Erstellung eines digitalen Anlagenmodells.

Im Falle eines unmittelbar bevorstehenden Funktionsversagens einer Tragrolle und dem damit verbundenen, akut erforderlichen Austausch einer solchen Tragrolle kann die Ausgabe des Wartungszeitpunktes an die Kommunikationsschnittstelle auch ein Alarmsignal beinhalten, gegebenenfalls verbunden mit einer Notabschaltung der gesamten Gurtförderanlage, um weitere Beschädigungen zu verhindern. Somit beinhaltet die Erfindung also auch ein Verfahren zur Identifikation von beschädigten Tragrollen einer Gurtförderanlage während des Betriebs der Gurtförderanlage, das Verfahren umfassend das vorgenannte Verfahren zum maschinellen Ermitteln des Funktionszustands von Tragrollen einer Gurtförderanlage in beliebigen möglichen Ausgestaltungen, wobei beschädigte Tragrollen erkannt werden und im Falle des Erkennens einer beschädigten Tragrolle für diese Tragrolle ein Benachrichtigungssignal an eine Kommunikationsschnittstelle ausgegeben wird.

Schließlich beinhaltet die Erfindung eine Einrichtung zum maschinellen Ermitteln des Funktionszustands von Tragrollen einer Gurtförderanlage während des Betriebs der Gurtförderanlage, die Einrichtung umfassend mindestens ein entlang zumindest eines Teilbereichs der Gurtförderanlage bewegbares unbemanntes Fahrzeug mit wenigstens einer bildgebenden Sensorik, mittels derer die Gurtförderanlage zumindest abschnittsweise sensorisch in Form von Bilddaten erfassbar ist und die zumindest eine Wärmebildsensorvorrichtung zur Erfassung von Wärmebilddaten umfasst, eine Datenverarbeitungsvorrichtung zur Auswertung der erfassten Bilddaten, um den Funktionszustand von Tragrollen einer Gurtförderanlage während des Betriebs der Gurtförderanlage zu ermitteln, wobei die Datenverarbeitungsvorrichtung ein Bildbereichsermittlungsmodul, das eingerichtet ist, in erfassten Bilddaten mindestens eine Erkennungsbildbereichsposition automatisch zu ermitteln, in welcher zumindest ein Teilbereich einer Tragrolle abgebildet ist, ein Bildbereichfestlegungsmodul, das eingerichtet ist, für eine ermittelte Erkennungsbildbereichsposition aus den Bilddaten jeweils eine Analysenbildbereichsposition in den Wärmebilddaten automatisch festzulegen, und ein Zustandsermittlungsmodul aufweist, das eingerichtet ist, in einer festgelegten Analysenbildbereichsposition Wärmebilddaten automatisch zu analysieren, um den Funktionszustand von Tragrollen automatisch zu ermitteln, wobei die bildgebende Sensorik eingerichtet ist, dass die erfassbaren Bilddaten zusätzlich zu den Wärmebilddaten auch Lichtbilddaten umfassen, wobei die wenigstens eine bildgebende Sensorik zusätzlich zu der Wärmebildsensorvorrichtung auch eine Lichtbildsensorvorrichtung zur Erfassung von Bilddaten von zumindest einem Teilbereich der Gurtförderanlage in Form von Lichtbilddaten umfasst, wobei das Bildbereichsermittlungsmodul eingerichtet ist, als Bilddaten der Gurtförderanlage, in denen mindestens eine Erkennungsbildbereichsposition automatisch ermittelt wird, Lichtbilddaten zu verwenden, in denen als Bilddatenbereiche Lichtbilddatenbereiche automatisch erkannt werden, und die Position eines jeweils erkannten Lichtbilddatenbereichs als Erkennungsbildbereichsposition automatisch bereitzustellen.

Gemäß einer weiteren Ausbildung der Erfindung kann die Einrichtung so ausgestaltet sein, dass das Bildbereichsermittlungsmodul ein Bildbereichserkennungsmodul und ein Schnittstellenmodul aufweist, von denen das Bildbereichserkennungsmodul eingerichtet ist, in den erfassten Bilddaten Bilddatenbereiche automatisch zu erkennen, in denen zumindest ein Teilbereich einer Tragrolle abgebildet ist, und von denen das Schnittstellenmodul eingerichtet ist, um die Position des erkannten Bilddatenbereichs als Erkennungsbildbereichsposition der jeweiligen Tragrolle automatisch bereitzustellen, und wobei das Bildbereichfestlegungsmodul eingerichtet ist, für jede ermittelte Erkennungsbildbereichsposition einer Tragrolle aus den Bilddaten jeweils eine Analysenbildbereichsposition der Tragrolle in den Wärmebilddaten automatisch festzulegen, die mit der jeweiligen Erkennungsbildbereichsposition aus den Bilddaten räumlich korrespondiert, und wobei das Zustandsermittlungsmodul ein Analysemodul und ein Zuordnungsmodul aufweist, von denen das Analysemodul eingerichtet ist, in der festgelegten Analysenbildbereichsposition der Tragrolle aus den Wärmebilddaten Temperaturdaten der jeweiligen Tragrolle automatisch zu ermitteln, und von denen das Zuordnungsmodul eingerichtet ist, die aus der Analysenbildbereichsposition ermittelten Temperaturdaten automatisch einem Funktionszustand der jeweiligen Tragrollen zuzuordnen.

Dabei kann es gemäß einer weiteren Ausbildung der Erfindung vorteilhaft sein, wenn die Einrichtung so ausgestaltet ist, dass die Datenverarbeitungsvorrichtung (Datenverarbeitungsanlage) zumindest ein lernfähiges künstliches neuronales Netzwerk aufweist, mittels dessen zumindest einer der nachfolgenden Erkennungen erfolgt: die Erkennung von Tragrollen oder Teilbereichen von Tragrollen zur automatischen Ermittlung von Bilddatenbereichen in den erfassten Bilddaten, in denen zumindest ein Teilbereich einer Tragrolle abgebildet ist, die Erkennung von Wärmebilddaten einer Tragrolle zur automatischen Ermittlung von Temperaturdaten der Tragrolle in einer festgelegten Analysenbildbereichsposition der Tragrolle, die Erkennung von Funktionszuständen einer Tragrolle aus den ermittelten Temperaturdaten der Tragrolle zur automatischen Zuordnung des Funktionszustand der Tragrollen.

Vorstehend sind bereits essentielle Bestandteile sowie einzelne optionale Bestandteile einer derartigen Einrichtung zum maschinellen Ermitteln des Funktionszustands von Tragrollen einer Gurtförderanlage beschrieben. Die Datenverarbeitungsvorrichtung weist ein Bildbereichsermittlungsmodul, ein Bildbereichfestlegungsmodul und ein Zustandsermittlungsmodul auf. Ferner kann das Bildbereichsermittlungsmodul ein Bildbereichserkennungsmodul und ein Schnittstellenmodul aufweisen und das Zustandsermittlungsmodul ein Analysemodul und ein Zuordnungsmodul. Je nach konkreter Ausgestaltung kann sich die Datenverarbeitungsvorrichtung zur Auswertung der erfassten Bilddaten auf dem Fahrzeug selbst befinden oder von diesem beabstandet, etwa als Server oder Rechnerwolke. Befindet sich die Datenverarbeitungsvorrichtung auf dem Fahrzeug, so können die Daten von der Sensorik zur weiteren Verarbeitung in einer drahtlosen Datenübertragung oder in einer kabelbasierten Datenübertragung zur Datenverarbeitungsvorrichtung übertragen werden. Ist die Datenverarbeitungsvorrichtung räumlich getrennt vom Fahrzeug, dann kann die Datenübertragung zur Datenverarbeitungsvorrichtung drahtlos erfolgen, also etwa als Funkübertragung, oder auch kabelgebunden, wenn sich das Fahrzeug in seiner Basisstation befindet. Damit kann ein etwaiges künstliches neuronales Netz im unbemannten Fahrzeug selbst realisiert sein oder aber von diesem getrennt, etwa auf einer externen Datenverarbeitungsvorrichtung.

Zur Verdeutlichung der Erfindung sind im Folgenden repräsentative Beispiele unter Bezugnahme auf die entsprechenden Figuren allgemein beschrieben, wobei auch einzelne Teilschritte und Abläufe derselben erläutert werden, die in Abhängigkeit von den jeweils gewünschten Zielen eines derartigen Verfahrens nahezu beliebig miteinander verknüpft werden können. Aus diesen Beispielen gehen weitere Vorteile und Anwendungsmöglichkeiten hervor, die anhand der beigefügten Zeichnungen im Folgenden ohne Beschränkung des durch die Ansprüche definierten Schutzumfangs der Erfindung näher beschrieben werden sollen, wobei auch einzelne Merkmale und Schritte erläutert werden, die in Abhängigkeit von den jeweils gewünschten Zielen nahezu beliebig miteinander verknüpft werden können. Die Figuren zeigen dabei jeweils schematisch
Fig. 1 eine schematische Darstellung einer Gurtförderanlage mit einer Einrichtung zum maschinellen Ermitteln des Funktionszustands der Tragrollen gemäß einer Ausbildung der vorliegenden Erfindung,
Fig. 2 eine schematische perspektivische Teilansicht einer Gurtförderanlage mit einer Einrichtung zum maschinellen Ermitteln des Funktionszustands der Tragrollen gemäß einer weiteren Ausbildung der vorliegenden Erfindung und
Fig. 3 eine schematische Darstellung eines Verfahrens zum maschinellen Ermitteln des Funktionszustands von Tragrollen einer Gurtförderanlage gemäß einer weiteren Ausbildung der vorliegenden Erfindung.

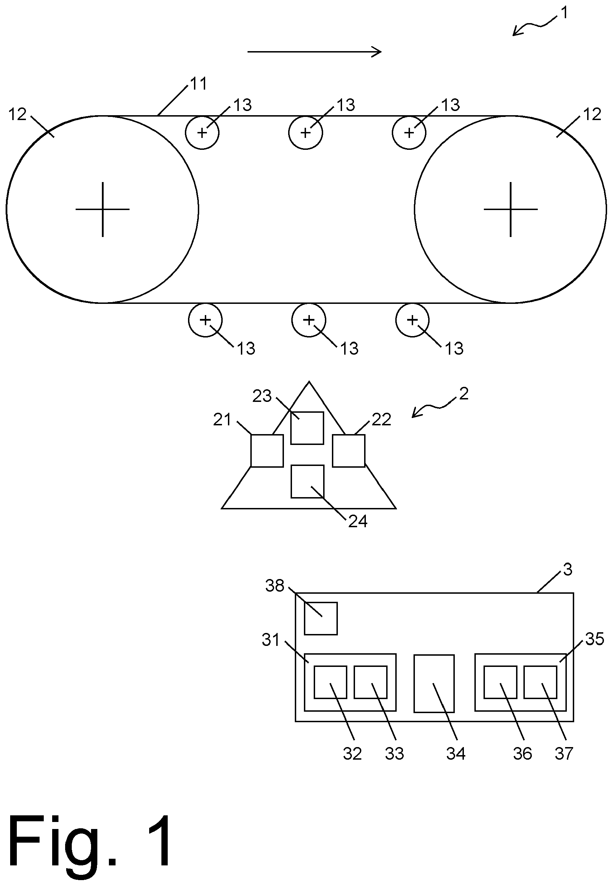

In Fig. 1 ist eine schematische Darstellung einer Gurtförderanlage 1 mit einer Einrichtung zum maschinellen Ermitteln des Funktionszustands der Tragrollen 13 der Gurtförderanlage 1 während des Betriebs der Gurtförderanlage 1 gemäß einer Ausbildung der vorliegenden Erfindung dargestellt. Die in Fig. 1 gezeigte Gurtförderanlage 1 umfasst einen Fördergurt 11, der von zwei Umlenkwalzen 12 umgelenkt wird, von denen eine Umlenkwalze 12 als Antriebstrommel ausgebildet ist (im vorliegenden Fall die rechts dargestellte Umlenkwalze 12). Das Obertrum des Fördergurtes 11 bildet hierbei das Lasttrum, über welches das Fördergut in Förderrichtung (durch einen Pfeil dargestellt) bewegt wird. Im Obertrum wie im Untertrum wird der Fördergurt 11 von Tragrollen 13 gestützt. Im vorliegenden Fall ist der Fördergurt 11 flach geführt, so dass die Tragrollen 13 in den Tragrollenstationen horizontal ausgerichtet sind; ebenfalls möglich ist hier eine Führung als gemuldeter Fördergurt oder gerollter Fördergurt, wobei die Tragrollen in den Tragrollenstationen dann U-förmig oder V-förmig beziehungsweise O-förmig angeordnet sind.

An der Gurtförderanlage 1 ist ein unbemanntes Fahrzeug 2 angeordnet. Hierbei handelt es sich um ein sich autonom fortbewegendes Fahrzeug oder ein ferngesteuertes Fahrzeug, das von einem Bediener ferngesteuert wird, beispielsweise mittels einer Funkfernsteuerung. Das Fahrzeug 2 ist ein bodengebundenes Landfahrzeug, es kann aber auch anders ausgebildet sein, beispielsweise als Fluggerät. Das unbemannte Fahrzeug 2 bewegt sich entlang der gesamten Gurtförderanlage 1. Darüber hinaus können der Gurtförderanlage 1 auch mehrere unbemannte Fahrzeuge zugeordnet sein. So kann beispielsweise vorgesehen sein, dass sich jedes Fahrzeug aus einer Mehrzahl an unbemannten Fahrzeuge nur in einem Teilabschnitt der Gurtförderanlage 1 bewegt, so dass zur Erfassung der gesamten Gurtförderanlage 1 jedes Fahrzeug 2 dieser Mehrzahl benötigt wird.

Das unbemannte Fahrzeug 2 weist eine bildgebende Sensorik auf, die eine Wärmebildsensorvorrichtung 21 und eine Lichtbildsensorvorrichtung 22 beinhaltet. Wärmebildsensorvorrichtung 21 und Lichtbildsensorvorrichtung 22 sind räumlich nah beieinander angeordnet und haben die gleiche Ausrichtung und einen im Wesentlichen gleichen Bildwinkel, so dass sie im Wesentlichen denselben Objektraum erfassen. Vorliegend ist die Wärmebildsensorvorrichtung 21 eine Wärmebildkamera und die Lichtbildsensorvorrichtung 22 eine Lichtbildkamera (monoskopisch oder stereoskopisch), wobei beide Kameras die erfassten Bilddaten elektronisch in digitaler Form aufzeichnen. Die Kameras können als Bilddaten Einzelbilder oder aber auch entsprechende Bewegtbilder (Filmaufnahmen) aufzeichnen. Darüber hinaus weist das unbemannte Fahrzeug 2 eine Positionsbestimmungsvorrichtung 23 auf, um die jeweils aktuelle Position des Fahrzeugs 2 in Korrelation mit den jeweils erfassten Bilddaten als Positionsdaten zu erfassen; im vorliegenden Fall handelt es sich um ein GPS-Modul, wobei die Positionsinformation als Metainformation in die Bilddaten eingefügt wird. Stattdessen kann aber auch die Lichtbildsensorvorrichtung 22 zur Positionsbestimmung eingesetzt werden, gegebenenfalls sogar die Wärmebildsensorvorrichtung 21. Zusätzlich weist die Sensorik des Fahrzeugs 2 eine Ausrichtungserfassung auf, um die jeweilige Ausrichtung beim Erfassen der Bilddaten als Ausrichtungsinformation zu ermitteln, im vorliegenden Fall eine inertiale Messeinheit.

Die aufgezeichneten Bilddaten, die Positionsdaten und die Ausrichtungsinformation werden über ein Datenübertragungsmodul 24 zu einer Datenverarbeitungsvorrichtung 3 übertragen, um dort ausgewertet zu werden. Die Datenverarbeitungsvorrichtung 3 ist im vorliegenden Fall von dem Fahrzeug 2 getrennt realisiert, beispielsweise in der Nähe des Leitstandes der Gurtförderanlage 1. Stattdessen kann die Datenverarbeitungsvorrichtung 3 aber auch auf dem Fahrzeug 2 angeordnet sein.

In der Datenverarbeitungsvorrichtung 3 werden die vom Datenübertragungsmodul 24 des unbemannten Fahrzeugs 2 übertragenen Daten einschließlich der Bilddaten - der Wärmebilddaten aus der Wärmebildkamera und der Lichtbilddaten aus der Lichtbildkamera - von dem Datenübertragungsmodul 38 der Datenverarbeitungsvorrichtung 3 empfangen. Die Lichtbilddaten (und gegebenenfalls auch die Wärmebilddaten) werden zunächst einem Bildbereichsermittlungsmodul 31 zugeführt, wo sie als Eingabedaten eines Bildbereichserkennungsmoduls 32 des Bildbereichsermittlungsmoduls 31 dienen. In dem Bildbereichserkennungsmodul 32 werden Bildbereiche automatisch erkannt, in denen Tragrollen 13 oder Teilbereiche von Tragrollen 13 abgebildet sind. Die Positionen der so erkannten Bildbereiche (Erkennungsbildbereichspositionen) werden zur weiteren Verarbeitung über ein Schnittstellenmodul 33 des Bildbereichsermittlungsmoduls 31 bereitgestellt. Vom Schnittstellenmodul 33 bezieht das Bildbereichfestlegungsmodul 34 die Positionen der in den Lichtbilddaten erkannten Bildbereiche und legt automatisch für diese in den Wärmebilddaten entsprechende räumlich korrespondierende Bildbereichspositionen als Analysenbildbereichspositionen fest. Die Wärmebilddaten mit den so festgelegten Analysenbildbereichspositionen werden dem Zustandsermittlungsmodul 35 zugeleitet. Innerhalb des Zustandsermittlungsmoduls 35 werden die Wärmebilddaten in einem Analysemodul 36 automatisch analysiert, wobei die Analyse hier auf die entsprechend festgelegten Bildbereichspositionen der Tragrollen 13 beschränkt ist. Die Ergebnisse dieser Analyse werden als Temperaturdaten in das Zuordnungsmodul 37 eingegeben, welches anhand der so in den jeweiligen Analysenbildbereichspositionen aus den Wärmebilddaten erhaltenen Temperaturdaten einer Tragrolle 13 dieser Tragrolle 13 automatisch einen Funktionszustand zuordnet.

Die Datenverarbeitungsvorrichtung 3 weist mehrere lernfähige künstliche neuronale Netzwerke auf (nicht dargestellt). Eines dieser lernfähigen künstlichen neuronalen Netzwerke dient zur Erkennung von Tragrollen 13 und Teilbereichen von Tragrollen 13, um Bilddatenbereiche in den erfassten Bilddaten zu ermitteln, in denen zumindest ein Teilbereich einer Tragrolle 13 abgebildet ist. Ein weiteres dieser lernfähigen künstlichen neuronalen Netzwerke dient zur Erkennung von Wärmebilddaten einer Tragrolle 13, um die Temperaturdaten der Tragrolle 13 in einer festgelegten Analysenbildbereichsposition der Tragrolle 13 automatisch zu ermitteln. Ein weiteres dieser lernfähigen künstlichen neuronalen Netzwerke dient zur Erkennung von Funktionszuständen einer Tragrolle 13 aus den ermittelten Temperaturdaten der Tragrolle 13, um den jeweiligen Tragrollen 13 automatisch einen Funktionszustand zuzuordnen. Künstliche neuronale Netzwerke werden ebenfalls für die entsprechenden maschinellen Lernvorgänge eingesetzt.

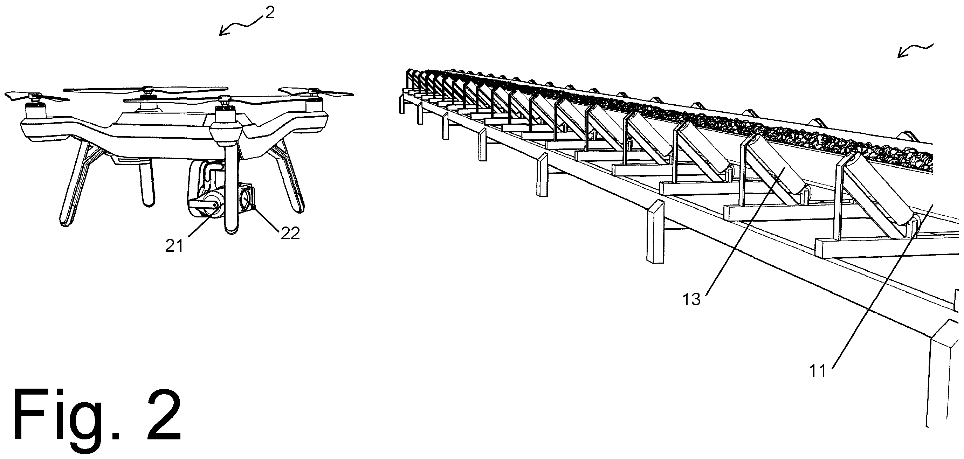

Eine schematische perspektivische Teilansicht einer Gurtförderanlage 1 mit einer speziellen Einrichtung zum maschinellen Ermitteln des Funktionszustands der Tragrollen 13 der Gurtförderanlage 1 während des Betriebs der Gurtförderanlage 1 gemäß einer besonderen Ausbildung der vorliegenden Erfindung ist in Fig. 2 dargestellt. Gezeigt ist hier lediglich das Obertrum des Fördergurtes 11 sowie ein unbemanntes Fahrzeug 2 der Einrichtung zum maschinellen Ermitteln des Funktionszustands der Tragrollen 13 der Gurtförderanlage 1. Der Fördergurt 11 ist hierbei als gemuldeter Fördergurt in U-Form geführt, die Führung wird über jeweils drei Tragrollen 13 pro Tragrollenstation erreicht, die in der Form eines auf der kürzeren Grundseite ruhenden Trapezes angeordnet sind, bei dem die längere Grundseite offen ist. In jeder Tragrollenstation ist dabei an der kürzeren Grundseite eine Tragrolle 13 horizontal angeordnet während die übrigen zwei Tragrollen die Schenkel des Trapezes bilden. Bilddaten der Gurtförderanlage 1 werden hierbei von dem unbemannten Fahrzeug 2 erfasst, welches vorliegend als autonome Drohne in Form eines Quadrocopters ausgebildet sind. Das Fahrzeug 2 bewegt sich schwebend (fliegend) parallel zur Förderrichtung (in Förderrichtung oder entgegen Förderrichtung) neben dem Obertrum der Gurtförderanlage 1. Zusätzlich zu dem unbemannten Fahrzeug 2 können weitere unbemannte Fahrzeuge vorgesehen sein, diese können beispielsweise unterschiedliche Teilabschnitte der Gurtförderanlage 1 erfassen. In seinem unteren Bereich weist das Fahrzeug 2 eine bildgebende Sensorik bestehend aus einer Wärmebildsensorvorrichtung 21 und einer Lichtbildsensorvorrichtung 22 auf. Zusätzlich weist die Sensorik Trägheitssensoren sowie einen elektronischen Kompass auf (nicht dargestellt), mithilfe derer die Ausrichtung der Bildsensorvorrichtungen als Ausrichtungsinformation erfasst wird (nach vorheriger Kalibrierung). Mit der Wärmebildsensorvorrichtung 21 und der parallel zu der Wärmebildsensorvorrichtung 21 ausgerichteten Lichtbildsensorvorrichtung 22 werden Bilddaten von den Tragrollen 13 der Gurtförderanlage 1 erfasst. Die Lichtbildsensorvorrichtung 22 dient auch zur Positionsbestimmung, indem die jeweils erfassten Lichtbilddaten mit einer zuvor von Gelände und Gurtförderanlage 1 erstellten dreidimensionalen Punktewolke verglichen werden und so eine eindeutige Position bestimmt wird; zusammen mit der Ausrichtungsinformation lässt sich damit eine eindeutige Zuordnung der in den Bilddaten erfassten Tragrollen 13 vornehmen. Stattdessen kann das Fahrzeug 2 auch eine separate Positionsbestimmungsvorrichtung 23 aufweisen, beispielsweise in Form eines GPS-Moduls. In der vorliegenden Ausbildung werden die erfassten Bilddaten und die Positionsdaten vom Fahrzeug 2 als Funksignale zu einer Datenverarbeitungsvorrichtung 3 (nicht dargestellt) übertragen, wo eine automatische Datenauswertung unter Beteiligung von lernfähigen künstlichen neuronalen Netzwerken erfolgt. Stattdessen können die Daten auch zunächst in einer Speichervorrichtung im Fahrzeug 2 gespeichert werden und erst nach der Rückkehr des Fahrzeugs 2 in eine Basisstation, in welcher auch die Sekundärbatterien des Fahrzeugs 2 aufgeladen werden, zu der Datenverarbeitungsvorrichtung 3 übertragen werden. Bei Verwendung eines hinreichend großen unbemannten Fahrzeugs 2 ist es ebenfalls möglich, die Datenverarbeitungsvorrichtung 3 zusammen mit einer Speichervorrichtung auf dem Fahrzeug 2 selbst anzuordnen, so dass die Datenauswertung dann auf dem Fahrzeug 2 erfolgt.

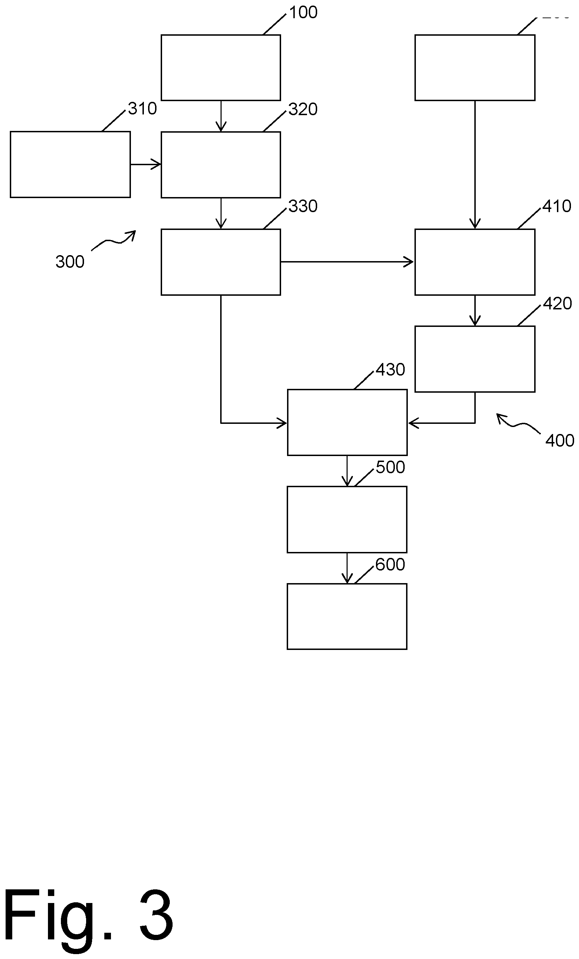

Im Folgenden wird ein computergestütztes Verfahren zur Identifikation von funktionsbeeinträchtigten Tragrollen 13 beschrieben, das auf dem Verfahren zum maschinellen Ermitteln des Funktionszustands von Tragrollen 13 einer Gurtförderanlage 1 während des Betriebs der Gurtförderanlage 1 beruht. Dieses Verfahren kann insbesondere bei den im Zusammenhang mit Fig. 1 und 2 beschriebenen Gurtförderanlagen 1 mit jeweils einer Einrichtung zum maschinellen Ermitteln des Funktionszustands der Tragrollen 13 zum Einsatz kommen. Einzelne Teilschritte dieses Verfahrens sind schematisch in Fig. 3 gezeigt.

In dem Verfahren ist ein unbemanntes Fahrzeug 2 mit wenigstens einer bildgebenden Sensorik vorgesehen, mittels derer die Gurtförderanlage 1 zumindest abschnittsweise sensorisch in Form von Bilddaten erfassbar ist, wobei Bilddaten von zumindest einem Teilbereich der Gurtförderanlage 1 als Wärmebilddaten erfasst werden (Schritt 200). In den erfassten Bilddaten der Gurtförderanlage 1 wird mindestens eine Erkennungsbildbereichsposition automatisch ermittelt (Schritt 300), in welcher zumindest ein Teilbereich einer Tragrolle 13 abgebildet ist. Für jede ermittelte Erkennungsbildbereichsposition aus den Bilddaten wird jeweils eine Analysenbildbereichsposition in den Wärmebilddaten automatisch festgelegt (Schritt 410). In jeder festgelegten Analysenbildbereichsposition werden Wärmebilddaten automatisch analysiert (Schritt 400), um den Funktionszustand von Tragrollen 13 automatisch zu ermitteln.

Dabei wird das mindestens eine unbemannte Fahrzeug 2 mit der wenigstens einen bildgebenden Sensorik umfassend zumindest eine Wärmebildsensorvorrichtung 21 zum Erfassen der Wärmebilddaten entlang zumindest eines Teilbereichs der Gurtförderanlage 1 bewegt. Mit Hilfe der bildgebenden Sensorik des unbemannten Fahrzeugs 2, das sich entlang der Haupterstreckung (Förderrichtung) der Gurtförderanlage 1 bewegt, werden von der Gurtförderanlage 1 abschnittsweise Lichtbilddaten erfasst (Schritt 100) und Wärmebilddaten erfasst (Schritt 200). Das unbemannte Fahrzeug 2 kann ein autonomes unbemanntes Fahrzeug oder ein ferngesteuertes unbemanntes Fahrzeug sein. Als autonome unbemannte Fahrzeuge kommen insbesondere auch Drohnen oder Roboter in Frage. Ein solches Fahrzeug 2 kann grundsätzlich als spurgebundenes oder spurfreies Fahrzeug ausgebildet sein, insbesondere als Landfahrzeug oder als Fluggerät (beispielsweise als Quadricopter).

In Schritt 100 werden mit der bildgebenden Sensorik Lichtbilddaten von zumindest einem Teilbereich der Gurtförderanlage 1 erfasst und in Schritt 200 werden mit der bildgebenden Sensorik von diesem zumindest einen Teilbereich der Gurtförderanlage 1 Wärmebilddaten erfasst. Auf den von der bildgebenden Sensorik dieses Fahrzeugs 2 erfassten Bilddaten sind Tragrollen 13 eines Teilbereichs der Gurtförderanlage 1 ganz oder teilweise dargestellt, insbesondere auch die Lager (Wälzlager) der entsprechenden Tragrollen 13. Die Lichtbilddaten und Wärmebilddaten sind hierbei statische monoskopische Bildaufnahmen, nämlich digitale Fotografien beziehungsweise digitale Thermalbilder. Stattdessen können aber auch andere Arten von Bilddaten zum Einsatz kommen, beispielsweise die entsprechenden Bewegtbilder (bewegte Bilder, Videos), stereoskopische Bildaufnahmen und dergleichen.

Die Lichtbilddaten enthalten hier neben der ortsaufgelösten Bildinformation auch die genaue Position (Ortsposition), an der die Aufnahme angefertigt wurde (nämlich in Form der Position des Fahrzeugs 2), sowie die Ausrichtungsinformation, bei welcher Ausrichtung der Lichtbildsensorvorrichtung 22 die Aufnahme angefertigt wurde (alternativ oder zusätzlich kann die entsprechende Information auch in den Wärmebilddaten enthalten sein). Diese zusätzlichen Informationen sind zusätzlich zu den Bildpunktdaten (Pixeldaten) in den entsprechenden Bilddateien als Metadaten abgespeichert. Stattdessen kann diese Information natürlich auch von den Bilddaten getrennt abgespeichert und übertragen werden, solange diese den entsprechenden Bilddaten eindeutig zuordenbar ist, beispielsweise über einen gemeinsamen Zeitstempel. Die Position wird mittels einer Positionsbestimmungsvorrichtung 23 ermittelt, die am Fahrzeug 2 selbst oder aber in einer Datenverarbeitungsvorrichtung 3 vorgesehen ist. Im vorliegenden Fall ist die Positionsbestimmungsvorrichtung 23 eine Vorrichtung zur Funk-basierten Positionsbestimmung, nämlich für eine satellitengestützte Positionsbestimmung mittels GPS. Stattdessen können auch andere Vorrichtungen und Verfahren zur Positionsbestimmung eingesetzt werden, etwa eine Positionsbestimmung auf der Grundlage einer optischen Umgebungserkennung, beispielsweise durch Vergleich von Bilddaten mit vorher aufgenommenen Bilddaten oder durch Vergleich von Bilddaten mit einem vorher erstellten dreidimensionalen Geländemodell, etwa als dreidimensionale Punktwolke, welche auch den entsprechenden Teilbereich der Gurtförderanlage 1 abbildet.

Die Bilddaten werden während der Aufnahme oder danach zwischengespeichert und anschließend - beispielsweise unmittelbar danach, in festen Zeitintervallen oder nach der Rückkehr des Fahrzeugs 2 in eine Basisstation - zu einer Datenverarbeitungsvorrichtung 3 übertragen. In der Datenverarbeitungsvorrichtung 3 werden die Daten automatisch verarbeitet und zusammen mit den Ergebnissen einer solchen Datenverarbeitung als Zieldaten gespeichert, etwa in Form von Datenbanken. Die so erhaltenen Zieldaten werden etwaigen Nutzer über eine interaktive Kommunikationsschnittstelle (Interface) bereitgestellt, beispielsweise den Mitarbeitern des Betreibers, dem Servicepersonal, den Wartungstechnikern und dergleichen.

In Schritt 300 werden in den erfassten Bilddaten der Gurtförderanlage 1 Bilddatenbereiche automatisch erkannt, in denen zumindest ein Teilbereich einer Tragrolle 13 abgebildet ist. Dieser Schritt beinhaltet ein automatisches Erkennen von Bilddatenbereichen (Schritt 320) und ein automatisches Bereitstellen von erkannten Bilddatenbereichen als Erkennungsbildbereichsposition (Schritt 330) ebenso wie ein Verbessern der Erkennungsgüte der automatischen Erkennung (Schritt 310). Am Ende von Schritt 300 wird die Position des jeweils erkannten Bilddatenbereichs als Erkennungsbildbereichsposition der jeweiligen Tragrolle 13 automatisch bereitgestellt (Schritt 330).

Im vorliegenden Fall sind die Bilddaten Lichtbilddaten und die Bilddatenbereiche Lichtbilddatenbereiche. In den Lichtbilddaten werden also Lichtbilddatenbereiche automatisch erkannt, in denen zumindest ein erkennbares Objekt abgebildet ist (Schritt 320). In den so erkannten Lichtbilddatenbereichen werden unter den erkennbaren Objekten Tragrollen 13 oder deren Teilbereiche automatisch erkannt. Damit erfolgt die Detektion und Identifikation von Objekten, insbesondere von Tragrollen 13 und den dazugehörigen Lagern (Wälzlagern) auf der Basis dieser Lichtbilddaten. Für jede erkannte Tragrolle 13 sowie für jeden erkannten Teilbereich einer Tragrolle 13 wird die Position des Lichtbilddatenbereichs, in dem die Tragrolle 13 oder der Teilbereich der Tragrolle 13 abgebildet ist, zur weiteren Verarbeitung als Erkennungsbildbereichsposition (Objektposition und Objektklasse) bereitgestellt (Schritt 330).

Die automatische Erkennung (Schritt 320) von Bilddatenbereichen stellt innerhalb von Schritt 300 einen zentralen Vorgang dar. Im vorliegenden Fall basiert das automatische Erkennen 320 von Bilddatenbereichen auf einem maschinellen Lernalgorithmus. Die Erkennungsgüte bei der automatischen Ermittlung der Erkennungsbildbereichsposition in den erfassten Lichtbilddaten, insbesondere die Erkennungsgüte der automatischen Erkennung von Lichtbilddatenbereichen, in denen zumindest ein erkennbares Objekt abgebildet ist (vor allem zumindest ein Teilbereich einer Tragrolle 13) und/oder die Erkennungsgüte der automatischen Erkennung von Tragrollen 13 oder Teilbereichen von Tragrollen 13 in den erkannten Lichtbilddatenbereichen wird anhand eines Lernverfahrens verbessert (Schritt 310), das mittels eines künstlichen neuronalen Netzes auf der Grundlage von Trainingsdaten (Trainingsbildern) durchgeführt wird, etwa von Lichtbilddaten, in denen solche Bildbereiche manuell mit Position und Objektbezeichnung markiert wurden, in denen die zu erlernenden Objekte abgebildet sind - insbesondere Tragrollen 13 oder Teilbereiche von Tragrollen 13. Mit Hilfe der Trainingsdaten wird unter anderem die Erkennungsgüte bei der Klassifikation verbessert. Darüber hinaus können in den Trainingsdaten auch weitere, für die Gurtförderanlage 1 charakteristische Objekte markiert sein, etwa Teilbereiche von Gerüstelementen, vom Fördergurt 11 und dergleichen. In diesem Fall enthalten die Trainingsdaten dann zusätzlich als Identifikator die dem erkannten Objekt zugeordnete und verifizierte Objektklasse. Bei dem künstlichen neuronalen Netz handelt es sich hier um ein mehrstufiges Convolutional Neural Network, welches aus zwei "Convolutional Neural Network"-Modulen besteht. Das erste Modul dient dabei zur Vorsichtung von Bilddatenregionen in den Lichtbilddaten, in denen sich unterschiedliche Objekte befinden könnten. Das Ergebnis dieser Vorsichtung wird anschließend an das zweite Modul übergeben, um in den so identifizierten potenziell relevanten Bilddatenregionen eine objektbasierte Klassifizierung durchzuführen. Das Ergebnis dieser Klassifizierung von Lichtbilddaten liefert die dem erkannten Objekt zugeordnete Objektklasse (die Objektbezeichnung, beispielsweise "Tragrolle", "Lager", "Stahlkabel" oder dergleichen), der ein Wahrscheinlichkeitswert aus einem Bereich von 0 bis 1 zugeordnet ist. Die Objektklasse mit dem höchsten Wahrscheinlichkeitswert stellt dabei ein Ergebnis dieser Auswertung dar. Die Auswertung des Bildes liefert ferner die dazugehörige Position des klassifizierten Objektes innerhalb der Bilddaten. Im vorliegenden Fall ist die Position eines solchen Objektes durch vier Zahlen definiert, nämlich durch zwei Paare an x/y-Koordinaten, die jeweils Punktpositionen im Bild entsprechen. Die beiden zu den Punktpositionen zugehörigen Punkte in den Lichtbilddaten spannen als gegenüberliegenden Kanten eines rechteckigen Auswahlrahmens ein Rechteck auf, in dem das Objekt zentral positioniert einbeschrieben ist. Abhängig von den untersuchten Lichtbilddaten können auch mehrere Objekte in einer Lichtbildaufnahme gleichzeitig identifiziert werden.

Die Bilddaten der Gurtförderanlage 1 werden jeweils einer Position in der Gurtförderanlage 1 zugeordnet. Zusätzlich oder stattdessen werden für festgelegte Analysenbildbereichspositionen die Wärmebilddaten oder Auswertungsinformationen jeweils einer individuellen Tragrolle 13 der Gurtförderanlage 1 zugeordnet. Die Zuordnung wird insbesondere über eine Funk-basierte Positionsbestimmung, über einen Abgleich von erfassten Bilddaten mit Vergleichsbilddaten, über eine Wegstreckenerfassung des unbemannten Fahrzeugs 2 und/oder über eine Ausrichtungserfassung der bildgebenden Sensorik vorgenommen. Eine derartige Zuordnung kann zu jedem Zeitpunkt des Verfahrens vorgenommen werden, bevor ein Vergleich mit historischen Daten stattfindet. Dazu wird die Gurtförderanlage 1 initial vermessen und die genaue Position (etwa die GPS-Position) jeder einzelnen Tragrolle 13 festgelegt. Für eine besonders zuverlässige Analyse kann hierfür auch ein dreidimensionales digitales Modell der Gurtförderanlage 1 erstellt werden (dieses kann zudem einer intuitiv erfassbaren Anzeige der ermittelten Informationen dienen). Jede Lichtbildaufnahme und Wärmebildaufnahme enthält dann als Metadaten die Position des Fahrzeugs 2 (in Form von GPS-Koordinaten) sowie Informationen zur Ausrichtung der Bildsensorvorrichtungen bei der Datenerfassung (etwa über einen internen elektronischen Kompass, eine inertiale Messeinheit oder die Schwenkwinkelanzeige eines Roboterarms), so dass die präzise Zuordnung der identifizierten Objekte aus der Bilderkennung (Schritt 320) zu einer bestimmten Tragrolle 13 der Gurtförderanlage 1 möglich ist. Um eine genaue Zuweisung gewährleisten zu können, wurde hier ein GPS-Modul gewählt, das eine Positionserfassung auf der Grundlage eines differentiellen GPS-Verfahrens mit einer Auflösung der GPS-Position im Zentimeterbereich bietet. Alternativ kann die Position auch optisch über einen Bildabgleich bestimmt werden. Dabei wird das aktuelle (zweidimensionale) Lichtbildkamerabild (erfasst mittels einer monoskopischen Kamera) oder eine Punktwolke (3D-Punktwolke, erfasst mittels einer stereoskopischen Kamera, einer bewegten monoskopischen Kamera, eines abtastenden Lasers, Lidars, Radars oder dergleichen) mit ortsbekannten zweidimensionalen Lichtbildern oder einer georeferenzierten Punktwolke abgeglichen. Darüber hinaus ist auch eine Positionsbestimmung im Nahfunkfeldern möglich, beispielsweise über RFID-Transponder, die in den Tragrollenstationen der jeweiligen Tragrollen 13 angeordnet sind und die über ein entsprechendes Lesegerät im Fahrzeug 2 ausgelesen werden. Die Positionsbestimmung mittels Funk-basierter Verfahren erfolgt dabei zu dem Zeitpunkt der Bilddatenerfassung, ein Bilddatenabgleich auf der Grundlage erfasster Bilddaten kann auch zu einem späteren Zeitpunkt vorgenommen werden. Im vorliegenden Fall erfolgt die Positionsbestimmung mittels GPS gleichzeitig mit Schritt 100 und/oder 200, so dass die Ortsinformation zusammen mit den Bilddaten und den Ausrichtungsdaten abgespeichert wird und eine Zuordnung zu konkreten Tragrollen 13 dann nach dem automatischen Erkennen von Bildbereichsdaten (Schritt 320) erfolgt.

In Schritt 410 wird für jede ermittelte und bereitgestellte Erkennungsbildbereichsposition einer Tragrolle 13 aus den Bilddaten jeweils eine Analysenbildbereichsposition der Tragrolle 13 in den Wärmebilddaten automatisch festgelegt, die mit der jeweiligen Erkennungsbildbereichsposition aus den Bilddaten räumlich korrespondiert. In der nachfolgenden automatischen Analyse von Wärmebilddaten (Schritt 400) werden nur für die Wärmebilddaten in den Analysenbildbereichspositionen die entsprechenden Temperaturdaten der Tragrollen 13 ermittelt und diese einer Analyse (Thermalanalyse) unterzogen, um dann den Tragrollen 13 und deren Lagern den jeweiligen Funktionszustand (Verschleißzustand) zuzuordnen. Da die Wärmebildsensorvorrichtung 21 und die Lichtbildsensorvorrichtung 22 einen geringen Abstand zueinander aufweisen, bezogen auf das Fahrzeug 2 in derselben Richtung starr ausgerichtet sind und beide Sensorvorrichtungen die Bilddaten annähernd gleichzeitig erfassen, lassen sich die Informationen aus der oben beschriebenen Objektdetektion in den Lichtbilddaten (Schritt 300) auf die Wärmebilddaten übertragen (infolge des bekannten Versatzes zwischen beiden Bildersensorvorrichtungen lässt sich ein Versatz herausrechnen). Wurde ein Objekt in den Lichtbilddaten als Tragrolle 13 erkannt und gekennzeichnet, so wird in Schritt 410 der rechteckige Auswahlrahmen, der in den Lichtbilddaten die Tragrolle 13 einschließt, in den Wärmebilddaten als Analysenbildbereichsposition festgelegt und daher auch im Wärmebild markiert. Die nachfolgende Thermalanalyse wird dann auf Wärmebilddaten innerhalb dieses ausgewählten Analysenbildbereichs beschränkt.

In Schritt 400 werden in der festgelegten Analysenbildbereichsposition der Tragrolle 13 die ausgewählten Wärmedaten automatisch analysiert. Dazu werden zunächst in den festgelegten Analysenbildbereichspositionen aus den Wärmebilddaten Temperaturdaten der jeweiligen Tragrolle 13 automatisch ermittelt (Schritt 420). Die im Analysenbildbereich ermittelten Temperaturdaten werden dann automatisch einem Funktionszustand der jeweiligen Tragrollen 13 zugeordnet (Schritt 430). Schritt 400 beinhaltet also die automatische Ermittlung von Temperaturdaten (Schritt 420) und die automatische Zuordnung der Temperaturdaten zu einem Funktionszustand (Schritt 430), nicht aber das automatische Festlegen der Analysenbildbereichsposition (Schritt 410 - es wäre jedoch auch eine Verfahrensführung möglich, in der das automatische Festlegen der Analysenbildbereichsposition Teil einer automatischen Analyse der Wärmebilddaten ist).

In Schritt 420 werden in jeder festgelegten Analysenbildbereichsposition Wärmebilddaten automatisch analysiert. Dazu werden in diesem Schritt zunächst in den festgelegten Analysenbildbereichspositionen Wärmebilddaten automatisch ausgewählt, die Wärmebilddaten der Tragrollen 13 sind. Anschließend werden die so ausgewählten Wärmedaten in den festgelegten Analysenbildbereichspositionen automatisch analysiert.

Um sicherzustellen, dass die Thermalanalyse an der Tragrolle 13 und deren Lagern durchgeführt wird und nicht etwa an weiteren Objekten wie etwa dem Förderband 11 oder an Stahlkabeln, die sich ebenfalls in dem als Analysenbildbereich festgelegten rechteckigen Auswahlrahmen befinden können, werden innerhalb der Analysenbildbereichsposition Unterbereiche mit zwei unterschiedlichen Auswahlverfahren definiert. Dadurch ist es möglich, die Objektregion für die nachfolgende eigentliche Datenanalyse so klein wie möglich zu halten. Hierfür werden innerhalb der festgelegten Analysenbildbereichspositionen Teilbereiche der Wärmebilddaten automatisch ausgewählt, in denen Wärmebilddaten in kreisartigen oder kreisähnlichen Konturen angeordnet sind. Zusätzlich werden innerhalb der festgelegten Analysenbildbereichspositionen Teilbereiche der Wärmebilddaten automatisch ausgewählt, in denen die Wärmebilddaten den Temperaturen eines gleichen Temperaturniveaus entsprechen. Bei dem ersten Auswahlverfahren wird der Auswahlrahmen daher auf kreisförmige Konturen untersucht. Der Bereich zur Untersuchung des Lagers der Tragrolle 13 wird dann als der Durchschnitt aller Kreiskonturen definiert, welche folglich selektiert werden. Bei dem zweiten Auswahlverfahren werden basierend auf der Temperaturverteilung im Auswahlrahmen mehrere Bereiche mit gleichem Temperaturniveau selektiert (die Bezeichnung Temperaturniveau schließt einen gewissen Temperaturbereich ein, dessen Breite entsprechend den konkreten Betriebsbedingungen der Gurtförderanlage 1 zu wählen ist). Zur Kombination beider Auswahlverfahren werden innerhalb jeder Analysenbildbereichsposition die Positionen der im ersten Auswahlverfahren selektierten Teilbereiche mit den Positionen der im zweiten Auswahlverfahren selektierten Teilbereiche verglichen. Der Teilbereich, dessen Wärmebilddaten der nachfolgenden eigentlichen Thermalanalyse unterzogen werden, ergibt sich als die gemeinsame Schnittmenge (Schnittfläche) der in den beiden Auswahlverfahren selektierten Teilbereiche. Die Kombination beider Auswahlverfahren bietet eine besonders hohe Verlässlichkeit dafür, dass die automatisch ausgewählten Wärmebilddaten tatsächlich repräsentativ für die Tragrollen 13 und deren Lager sind. Zusätzlich wird die Erkennungsgüte bei der automatischen Auswahl der Wärmebilddaten, die Wärmebilddaten der Tragrollen 13 sind, insbesondere bei der automatischen Auswahl der Wärmebilddaten, die in solchen Teilbereichen innerhalb der festgelegten Analysenbildbereichspositionen liegen, in denen Wärmebilddaten in kreisartigen oder kreisähnlichen Konturen angeordnet sind und/oder in denen Wärmebilddaten den Temperaturen eines gleichen Temperaturniveaus entsprechen, anhand eines mittels eines künstlichen neuronalen Netzes durchgeführten Lernverfahrens verbessert, nämlich über ein mehrstufiges Convolutional Neural Network, welches zwei "Convolutional Neural Network"-Module aufweist.

In Schritt 430 werden die aus der Analysenbildbereichsposition ermittelten Temperaturdaten automatisch einem Funktionszustand einer Tragrolle 13 zugeordnet, indem die ermittelten Temperaturdaten der jeweiligen Tragrolle 13 entweder automatisch in jeweils einen Funktionszustand aus einer Vielzahl an vorher festgelegten Funktionszuständen klassifiziert werden oder automatisch jeweils einem Funktionszustand im Rahmen einer Clusteranalyse zugeordnet werden, insbesondere im Rahmen einer multivariaten Clusteranalyse. Dabei wird zusätzlich die Erkennungsgüte bei der automatischen Ermittlung des Funktionszustands von Tragrollen 13, insbesondere die Klassifizierung der Wärmebilddaten, anhand eines Lernverfahrens verbessert, das mittels eines künstlichen neuronalen Netzes durchgeführt wird. Hierbei werden in den ausgewählten Bereichen charakteristische Merkmale der Temperatur wie etwa die Maximaltemperatur, die Minimaltemperatur, der Temperaturmittelwert, der Temperaturmedian sowie charakteristische Merkmale der Temperaturverteilung extrahiert (beispielsweise deren Breite, Symmetrie oder etwaige Hotspots). Die automatische Zuordnung zu einem Funktionszustand 430 erfolgt hier mittels eines multivariaten Clustering-Algorithmus, durch welchen die Gesamtheit der charakteristischen Merkmale einer jeden Tragrolle 13 und deren Lager jeweils einem von mehreren Verschleißzuständen zugeordnet werden. Im vorliegenden Fall ist dies eine Zuordnung zu "Austausch erforderlich", "Austausch demnächst erforderlich", "Austausch noch nicht absehbar". Dieser Clustering-Algorithmus wird fortlaufend trainiert, wozu als Trainingsdaten entsprechend verifizierte Informationen zum tatsächlichen Funktionszustand von Tragrollen 13 eingegeben werden, wie sie etwa nach einer manuellen Überprüfung im Rahmen einer Inspektion oder Wartung zur Verifikation des Funktionszustands erhalten werden.

Das Erfassen der Bilddaten und deren Analyse, also das Verfahren zum maschinellen Ermitteln des Funktionszustands von Tragrollen 13 einer Gurtförderanlage 1 während des Betriebs der Gurtförderanlage 1 (Schritte 100 - 400), wird in regelmäßigen Zeitabständen durchgeführt. Dabei werden für jede Tragrolle 13 Funktionszustand, Bilddaten und ermittelte Temperaturdaten in einer Funktionszustandsdatensammlung, aufgenommen, insbesondere in eine Funktionszustandsdatenbank (nicht dargestellt). In dieser Funktionszustandsdatensammlung ist jede Tragrolle 13 der Gurtförderanlage 1 mit ihrer exakten GPS-Position und ihrer jeweiligen Spezifikation erfasst; dies beinhaltet beispielsweise für die Tragrolle 13 deren Größe, Material, Hersteller, Typnummer, Einbaudatum und dergleichen. Für jede Tragrolle 13 werden in jedem Erfassungszyklus auch die Speicherpfade der zugehörigen Bilddaten (als Rohdaten und als bearbeitete Daten nach einer Verarbeitung) sowie die Analyseresultate mit Zeitstempel gespeichert. Die gespeicherten Analyseresultate beinhalten neben der Position (Tragrolle 13 und deren Lager) und den Temperaturdaten, insbesondere den charakteristischen Temperaturkenngrößen wie Maximaltemperatur, Minimaltemperatur, Temperaturmittelwert, Temperaturmedian und der Temperaturverteilung, auch die ermittelten Funktionszustände (als Verschleißzustandsklassen). Darüber hinaus können für jede Tragrolle 13 auch zusätzliche Informationen wie etwa Temperaturgrenzwerte (beispielsweise 80 °C für einen in absehbarer Zeit bevorstehenden Austausch und 90 °C für einen unmittelbar erforderlichen Austausch), anstehende Wartungsvorgänge und dergleichen hinterlegt werden.

Über eine interaktive Kommunikationsschnittstelle (lokales User-Interface oder online-User-Interface, beispielsweise über lokal installierte Computerprogramme oder über mobile oder webbasierte Anwendungsprogramme oder Applikationen), lässt sich auf die in der Funktionszustandsdatensammlung abgespeicherten Daten zugreifen und lassen diese sich abrufen, etwa um die entsprechenden Informationen visuell darzustellen. Auf diese Weise können sich insbesondere auch Servicemitarbeiter oder Wartungstechniker Markierungen und Auflistungen aller wartungsbedürftigen Tragrollen 13 und deren GPS-Position anzeigen lassen oder während einer Inspektion und Wartung von Tragrollen 13 zu Dokumentationszwecken entsprechende Fotos und Kommentare interaktiv hinzufügen, beispielsweise eine manuelle Bewertung des Verschleißzustandes oder eine Auflistung der konkret durchgeführten Wartungsarbeiten und Austauschtätigkeiten. Diese Informationen werden anschließend mit einem Zeitstempel in einer Datenbank abgespeichert und können verwendet werden, um die Qualität der Klassifizierung im Rahmen eines maschinellen Lernvorgangs zu verbessern. Ferner lassen sich mit Hilfe der Funktionszustandsdatensammlung auch die exakten Positionen der Tragrollen 13 auf einer Kartendarstellung anzeigen, die auf verfügbarem Kartenmaterial, Satellitenaufnahmen oder einem dreidimensionalen digitalen Modell der Gurtförderanlage 1 beruht. Dabei können etwa von einem Benutzer einzelne Tragrollen 13 auf der Karte interaktiv ausgewählt werden, um zusätzliche Informationen zu diesen Tragrollen 13 einsehen zu können. Zusätzlich können aktuelle Funktionszustände / Verschleißzustände sowie ausgewählte Temperaturmerkmale aller Tragrollen 13 in einem Übersichtsdiagramm dargestellt werden. Die Daten zu den Tragrollen 13 lassen sich auch in Listenform aufrufen, wobei individuelle Tragrollen 13 auch in dieser Darstellung interaktiv ausgewählt und deren Informationen eingesehen und Kommentare zu einzelnen Tragrollen 13 abgespeichert werden können, wobei das Temperaturprofil der jeweiligen Tragrolle 13 dargestellt oder ihre Wärmebilddaten und die Lichtbilddaten angezeigt werden kann, auch als zeitlicher Verlauf der historischen Werte einschließlich aller Änderungen.

Das in Fig. 3 dargestellte Verfahren zur Identifikation von funktionsbeeinträchtigten Tragrollen 13 einer Gurtförderanlage 1 während des Betriebs der Gurtförderanlage 1 umfasst zusätzlich zu dem zuvor beschriebenen Verfahren zum maschinellen Ermitteln des Funktionszustands von Tragrollen 13 auch das Erkennen funktionsbeeinträchtigter Tragrollen 13 anhand eines Vergleichs des Funktionszustands und der Temperaturdaten mit historischen Daten aus einer Funktionszustandsdatenbank (Schritt 500). Auf der Grundlage dieses Vergleichs wird ein Zeitpunkt für einen Austausch der jeweiligen Tragrolle 13 ermittelt (Schritt 600). Im Zusammenhang mit einer derartigen vorausschauenden Wartung lassen sich mit dem beschriebenen Verfahren also bei der wiederholten Durchführung von Inspektionsmaßnahmen die Funktionszustände aller Tragrollen 13 ohne personellen Mehraufwand in kurzen Intervallen überwachen und kritische Tragrollen 13 frühzeitig identifizieren. Außerdem lässt sich die zeitliche Entwicklung der Thermalmerkmale mittels Extrapolation oder Regressionsanalyse analysieren (Schritt 500), so dass eine Prognose zur voraussichtlich verbleibenden Lebensdauer der Tragrolle 13 erstellt und ein optimaler Zeitpunkt für Wartungsarbeiten empfohlen werden kann (Schritt 600). Die für die jeweiligen Tragrollen 13 ermittelten Zeitpunkte werden an eine Kommunikationsschnittstelle ausgegeben, etwa in Form einer Bildschirmanzeige, als automatisch erstellter Kalendereintrag in Terminverwaltungsprogramm, als automatische Bestellung von Tragrollen oder Verbrauchsmaterial beim Hersteller oder Händler oder - im Falle eines zwingend erforderlichen sofortigen Austauschs - auch als Warnsignal, gegebenenfalls verbunden mit einem regelungstechnischen Eingriff zum Anhalten der Gurtförderanlage 1, um etwaige Folgeschäden zu vermeiden, wie sie beispielsweise am Fördergurt 11 auftreten können.

Das zuvor beschriebene Verfahren zum maschinellen Ermitteln des Funktionszustands von Tragrollen 13 einer Gurtförderanlage 1 während des Betriebs der Gurtförderanlage 1 und insbesondere auch das zuvor beschriebene Verfahren zur Identifikation von funktionsbeeinträchtigten Tragrollen 13 einer Gurtförderanlage 1 während des Betriebs der Gurtförderanlage 1 sind jeweils in Form eines Computerprogramms realisiert. Dieses Computerprogramm ist auf einem maschinenlesbaren Datenträger (computerlesbaren Datenträger, maschinenlesbaren Speichermedium/Medium, computerlesbaren Speichermedium/Medium) gespeichert.

### Bezugszeichenliste

- 1: Gurtförderanlage
- 11: Fördergurt
- 12: Umlenkwalze
- 13: Tragrolle
- 2: unbemanntes Fahrzeug
- 21: Wärmebildsensorvorrichtung
- 22: Lichtbildsensorvorrichtung
- 23: Positionsbestimmungsvorrichtung
- 24: Datenübertragungsmodul
- 3: Datenverarbeitungsvorrichtung
- 31: Bildbereichsermittlungsmodul
- 32: Bildbereichserkennungsmodul
- 33: Schnittstellenmodul
- 34: Bildbereichfestlegungsmodul
- 35: Zustandsermittlungsmodul
- 36: Analysemodul
- 37: Zuordnungsmodul
- 38: Datenübertragungsmodul
- 100: Erfassen von Lichtbilddaten
- 200: Erfassen von Wärmebilddaten
- 300: automatisches Ermitteln mindestens einer Erkennungsbildbereichsposition
- 310: Verbessern der Erkennungsgüte der automatischen Erkennung
- 320: automatisches Erkennen von Bilddatenbereichen
- 330: automatisches Bereitstellen von erkannten Bilddatenbereichen als Erkennungsbildbereichsposition
- 400: automatische Analyse von Wärmebilddaten
- 410: automatisches Festlegen der Analysenbildbereichsposition
- 420: automatische Ermittlung von Temperaturdaten
- 430: automatische Zuordnung zu einem Funktionszustand
- 500: Vergleich mit historischen Daten aus Funktionszustandsdatenbank
- 600: Ermittlung des Zeitpunktes für einen Austausch

## Patentansprüche

1. Verfahren zum maschinellen Ermitteln des Funktionszustands von Tragrollen (13) einer Gurtförderanlage (1) während des Betriebs der Gurtförderanlage (1),
wobei mindestens ein unbemanntes Fahrzeug (2) mit wenigstens einer bildgebenden Sensorik vorgesehen ist, mittels derer die Gurtförderanlage (1) zumindest abschnittsweise sensorisch in Form von Bilddaten erfassbar ist, wobei Bilddaten von zumindest einem Teilbereich der Gurtförderanlage (1) als Wärmebilddaten erfasst werden,
in den erfassten Bilddaten der Gurtförderanlage (1) mindestens eine Erkennungsbildbereichsposition automatisch ermittelt wird, in welcher zumindest ein Teilbereich einer Tragrolle (13) abgebildet ist,
für jede ermittelte Erkennungsbildbereichsposition aus den Bilddaten jeweils eine Analysenbildbereichsposition in den Wärmebilddaten automatisch festgelegt wird, und
in jeder festgelegten Analysenbildbereichsposition Wärmebilddaten automatisch analysiert werden, um den Funktionszustand von Tragrollen (13) automatisch zu ermitteln,
**dadurch gekennzeichnet, dass**
die von der bildgebenden Sensorik erfassbaren Bilddaten zusätzlich zu den Wärmebilddaten auch Lichtbilddaten umfassen,
Bilddaten von zumindest einem Teilbereich der Gurtförderanlage (1) auch als Lichtbilddaten erfasst werden,
die erfassten Bilddaten der Gurtförderanlage (1), in denen mindestens eine Erkennungsbildbereichsposition automatisch ermittelt wird, Lichtbilddaten sind, in denen als Bilddatenbereiche Lichtbilddatenbereiche automatisch erkannt werden, und
die Position eines jeweils erkannten Lichtbilddatenbereichs als Erkennungsbildbereichsposition automatisch bereitgestellt wird.

2. Verfahren nach Anspruch 1, wobei
Bilddaten von zumindest einem Teilbereich der Gurtförderanlage (1) als Wärmebilddaten erfasst werden, indem das mindestens eine unbemannte Fahrzeug (2) mit der wenigstens einen bildgebenden Sensorik umfassend eine Wärmebildsensorvorrichtung (21) zum Erfassen der Wärmebilddaten und eine Lichtbildsensorvorrichtung (22) zum Erfassen der Lichtbilddaten entlang zumindest eines Teilbereichs der Gurtförderanlage (1) bewegt wird, mit der bildgebenden Sensorik Bilddaten von zumindest einem Teilbereich der Gurtförderanlage (1) erfasst werden und die Bilddaten zumindest Wärmebilddaten und Lichtbilddaten umfassen,
in den erfassten Lichtbilddaten der Gurtförderanlage (1) die mindestens eine Erkennungsbildbereichsposition automatisch ermittelt wird, indem in den von zumindest einem Teilbereich der Gurtförderanlage (1) erfassten Lichtbilddaten Lichtbilddatenbereiche automatisch erkannt werden, in denen zumindest ein Teilbereich einer Tragrolle (13) abgebildet ist, und die Position des jeweils erkannten Lichtbilddatenbereichs als Erkennungsbildbereichsposition der jeweiligen Tragrolle (13) automatisch bereitgestellt wird,
für jede ermittelte Erkennungsbildbereichsposition aus den Lichtbilddaten jeweils eine Analysenbildbereichsposition in den Wärmebilddaten automatisch festgelegt wird, indem für jede ermittelte Erkennungsbildbereichsposition einer Tragrolle (13) aus den Lichtbilddaten jeweils eine Analysenbildbereichsposition der Tragrolle (13) in den Wärmebilddaten automatisch festgelegt wird, die mit der jeweiligen Erkennungsbildbereichsposition aus den Lichtbilddaten räumlich korrespondiert,
in jeder festgelegten Analysenbildbereichsposition die Wärmebilddaten automatisch analysiert werden, indem in der festgelegten Analysenbildbereichsposition der Tragrolle (13) aus den Wärmebilddaten Temperaturdaten der jeweiligen Tragrolle (13) automatisch ermittelt werden und die aus der Analysenbildbereichsposition ermittelten Temperaturdaten automatisch einem Funktionszustand der jeweiligen Tragrollen (13) zugeordnet werden.

3. Verfahren nach Anspruch 1 oder 2, wobei in den erfassten Lichtbilddaten der Gurtförderanlage (1) die mindestens eine Erkennungsbildbereichsposition automatisch ermittelt wird, indem in den Lichtbilddaten Lichtbilddatenbereiche automatisch erkannt werden, in denen zumindest ein erkennbares Objekt abgebildet ist, in den so erkannten Lichtbilddatenbereichen unter den erkennbaren Objekten Tragrollen (13) oder Teilbereiche von Tragrollen (13) automatisch erkannt werden und für jede erkannte Tragrolle (13) sowie für jeden erkannten Teilbereich einer Tragrolle (13) die Position des Lichtbilddatenbereichs, in dem die Tragrolle (13) oder der Teilbereich der Tragrolle (13) abgebildet ist, als Erkennungsbildbereichsposition bereitgestellt wird.

4. Verfahren nach einem der Ansprüche 1 bis 3, wobei die Erkennungsgüte bei der automatischen Ermittlung der Erkennungsbildbereichsposition in den erfassten Lichtbilddaten, insbesondere die Erkennungsgüte der automatischen Erkennung von Lichtbilddatenbereichen, in denen zumindest ein erkennbares Objekt abgebildet ist, insbesondere zumindest ein Teilbereich einer Tragrolle (13), und/oder die Erkennungsgüte der automatischen Erkennung von Tragrollen (13) oder Teilbereichen von Tragrollen (13) in den erkannten Lichtbilddatenbereichen, anhand eines mittels eines künstlichen neuronalen Netzes durchgeführten Lernverfahrens verbessert wird, insbesondere mittels eines einstufigen oder mehrstufigen Convolutional Neural Networks.

5. Verfahren nach einem der Ansprüche 1 bis 4, wobei in jeder festgelegten Analysenbildbereichsposition Wärmebilddaten automatisch analysiert werden, indem in den festgelegten Analysenbildbereichspositionen Wärmebilddaten automatisch ausgewählt werden, die Wärmebilddaten der Tragrollen (13) sind, und in den festgelegten Analysenbildbereichspositionen die ausgewählten Wärmedaten automatisch analysiert werden.

6. Verfahren nach Anspruch 5, wobei Wärmebilddaten automatisch ausgewählt werden, die in solchen Teilbereichen innerhalb der festgelegten Analysenbildbereichspositionen liegen, in denen Wärmebilddaten in kreisartigen oder kreisähnlichen Konturen angeordnet sind und/oder in denen Wärmebilddaten den Temperaturen eines gleichen Temperaturniveaus entsprechen.

7. Verfahren nach Anspruch 5 oder 6, wobei die Erkennungsgüte bei der automatischen Auswahl der Wärmebilddaten, die Wärmebilddaten der Tragrollen (13) sind, anhand eines mittels eines künstlichen neuronalen Netzes durchgeführten Lernverfahrens verbessert wird, insbesondere die Erkennungsgüte bei der automatischen Auswahl der Wärmebilddaten, die in solchen Teilbereichen innerhalb der festgelegten Analysenbildbereichspositionen liegen, in denen Wärmebilddaten in kreisartigen oder kreisähnlichen Konturen angeordnet sind und/oder in denen Wärmebilddaten den Temperaturen eines gleichen Temperaturniveaus entsprechen.

8. Verfahren nach einem der Ansprüche 1 bis 7, wobei die Bilddaten der Gurtförderanlage (1) jeweils einer Position in der Gurtförderanlage (1) zugeordnet werden und/oder für festgelegte Analysenbildbereichspositionen die Wärmebilddaten oder Auswertungsinformationen jeweils einer individuellen Tragrolle (13) der Gurtförderanlage (1) zugeordnet werden, wobei die Zuordnung insbesondere über eine Funk-basierte Positionsbestimmung, über einen Abgleich von erfassten Bilddaten mit Vergleichsbilddaten, über eine Wegstreckenerfassung des unbemannten Fahrzeugs (2) und/oder über eine Ausrichtungserfassung der bildgebenden Sensorik vorgenommen wird.

9. Verfahren nach Anspruch 2 oder einem der auf Anspruch 2 rückbezogenen Ansprüche 3 bis 8, wobei die aus der Analysenbildbereichsposition ermittelten Temperaturdaten automatisch einem Funktionszustand einer Tragrolle (13) zugeordnet werden, indem die ermittelten Temperaturdaten der jeweiligen Tragrolle (13) entweder automatisch in jeweils einen Funktionszustand aus einer Vielzahl an vorher festgelegten Funktionszuständen klassifiziert werden oder automatisch jeweils einem Funktionszustand im Rahmen einer Clusteranalyse zugeordnet werden, insbesondere im Rahmen einer multivariaten Clusteranalyse.

10. Verfahren nach einem der Ansprüche 1 bis 9, wobei die Erkennungsgüte bei der automatischen Ermittlung des Funktionszustands von Tragrollen (13), insbesondere die Klassifizierung der Wärmebilddaten, anhand eines mittels eines künstlichen neuronalen Netzes durchgeführten Lernverfahrens verbessert wird.

11. Verfahren nach einem der Ansprüche 1 bis 10, wobei für die jeweilige Tragrolle (13) der Funktionszustand, die Bilddaten und/oder gegebenenfalls die ermittelten Temperaturdaten in einer Funktionszustandsdatensammlung aufgenommen werden.

12. Verfahren zur Identifikation von funktionsbeeinträchtigten Tragrollen (13) einer Gurtförderanlage (1) während des Betriebs der Gurtförderanlage (1), das Verfahren umfassend das Verfahren zum maschinellen Ermitteln des Funktionszustands von Tragrollen (13) einer Gurtförderanlage (1) nach einem der Ansprüche 1 bis 11, wobei funktionsbeeinträchtigte Tragrollen (13) erkannt werden, anhand eines Vergleichs mit historischen Daten aus einer Funktionszustandsdatenbank ein Zeitpunkt für einen Austausch der jeweiligen Tragrolle (13) ermittelt wird und für diese Tragrolle (13) der ermittelte Zeitpunkt an eine Kommunikationsschnittstelle ausgegeben wird.

13. Einrichtung zum maschinellen Ermitteln des Funktionszustands von Tragrollen (13) einer Gurtförderanlage (1) während des Betriebs der Gurtförderanlage (1), die Einrichtung umfassend
mindestens ein entlang zumindest eines Teilbereichs der Gurtförderanlage (1) bewegbares unbemanntes Fahrzeug (2) mit wenigstens einer bildgebenden Sensorik, mittels derer die Gurtförderanlage (1) zumindest abschnittsweise sensorisch in Form von Bilddaten erfassbar ist und die zumindest eine Wärmebildsensorvorrichtung (21) zur Erfassung von Bilddaten in Form von Wärmebilddaten umfasst,
eine Datenverarbeitungsvorrichtung (3) zur Auswertung der erfassten Bilddaten, um den Funktionszustand von Tragrollen (13) einer Gurtförderanlage (1) während des Betriebs der Gurtförderanlage (1) zu ermitteln, wobei die Datenverarbeitungsvorrichtung (3) ein Bildbereichsermittlungsmodul (31), das eingerichtet ist, in erfassten Bilddaten mindestens eine Erkennungsbildbereichsposition automatisch zu ermitteln, in welcher zumindest ein Teilbereich einer Tragrolle (13) abgebildet ist, ein Bildbereichfestlegungsmodul (34), das eingerichtet ist, für eine ermittelte Erkennungsbildbereichsposition aus den Bilddaten jeweils eine Analysenbildbereichsposition in den Wärmebilddaten automatisch festzulegen, und ein Zustandsermittlungsmodul (35) aufweist, das eingerichtet ist, in einer festgelegten Analysenbildbereichsposition Wärmebilddaten automatisch zu analysieren, um den Funktionszustand von Tragrollen (13) automatisch zu ermitteln,
**dadurch gekennzeichnet, dass**
die bildgebende Sensorik eingerichtet ist, dass die erfassbaren Bilddaten zusätzlich zu den Wärmebilddaten auch Lichtbilddaten umfassen,
wobei die wenigstens eine bildgebende Sensorik zusätzlich zu der Wärmebildsensorvorrichtung (21) auch eine Lichtbildsensorvorrichtung (22) zur Erfassung von Bilddaten von zumindest einem Teilbereich der Gurtförderanlage (1) in Form von Lichtbilddaten umfasst,
wobei das Bildbereichsermittlungsmodul (31) eingerichtet ist, als Bilddaten der Gurtförderanlage (1), in denen mindestens eine Erkennungsbildbereichsposition automatisch ermittelt wird, Lichtbilddaten zu verwenden, in denen als Bilddatenbereiche Lichtbilddatenbereiche automatisch erkannt werden, und die Position eines jeweils erkannten Lichtbilddatenbereichs als Erkennungsbildbereichsposition automatisch bereitzustellen.

14. Einrichtung nach Anspruch 13, wobei
das Bildbereichsermittlungsmodul (31) ein Bildbereichserkennungsmodul (32) und ein Schnittstellenmodul (33) aufweist, von denen das Bildbereichserkennungsmodul (32) eingerichtet ist, in den erfassten Lichtbilddaten Lichtbilddatenbereiche automatisch zu erkennen, in denen zumindest ein Teilbereich einer Tragrolle (13) abgebildet ist, und von denen das Schnittstellenmodul (33) eingerichtet ist, um die Position des erkannten Lichtbilddatenbereichs als Erkennungsbildbereichsposition der jeweiligen Tragrolle (13) automatisch bereitzustellen,
und wobei das Bildbereichfestlegungsmodul (34) eingerichtet ist, für jede ermittelte Erkennungsbildbereichsposition einer Tragrolle (13) aus den Lichtbilddaten jeweils eine Analysenbildbereichsposition der Tragrolle (13) in den Wärmebilddaten automatisch festzulegen, die mit der jeweiligen Erkennungsbildbereichsposition aus den Lichtbilddaten räumlich korrespondiert,
und wobei das Zustandsermittlungsmodul (35) ein Analysemodul (36) und ein Zuordnungsmodul (37) aufweist, von denen das Analysemodul (36) eingerichtet ist, in der festgelegten Analysenbildbereichsposition der Tragrolle (13) aus den Wärmebilddaten Temperaturdaten der jeweiligen Tragrolle (13) automatisch zu ermitteln, und von denen das Zuordnungsmodul (37) eingerichtet ist, die aus der Analysenbildbereichsposition ermittelten Temperaturdaten automatisch einem Funktionszustand der jeweiligen Tragrollen (13) zuzuordnen.

15. Einrichtung nach Anspruch 14, wobei die Datenverarbeitungsvorrichtung (3) zumindest ein lernfähiges künstliches neuronales Netzwerk aufweist, mittels dessen zumindest einer der nachfolgenden Erkennungen erfolgt: die Erkennung von Tragrollen (13) oder Teilbereichen von Tragrollen (13) zur automatischen Ermittlung von Lichtbilddatenbereichen in den erfassten Lichtbilddaten, in denen zumindest ein Teilbereich einer Tragrolle (13) abgebildet ist, die Erkennung von Wärmebilddaten einer Tragrolle (13) zur automatischen Ermittlung von Temperaturdaten der Tragrolle (13) in einer festgelegten Analysenbildbereichsposition der Tragrolle(13), die Erkennung von Funktionszuständen einer Tragrolle (13) aus den ermittelten Temperaturdaten der Tragrolle (13) zur automatischen Zuordnung des Funktionszustand der Tragrollen (13).

## Claims

1. Method for the machine-based determination of the functional state of support rollers (13) of a belt conveyor system (1) during the operation of the belt conveyor system (1), wherein at least one unmanned vehicle (2) with at least one imaging sensor system is provided, by means of which at least sections of the belt conveyor system (1) can be captured in the form of image data, wherein image data of at least one subregion of the belt conveyor system (1) is captured as thermal image data,
in the captured image data of the belt conveyor system (1) at least one identification image region position, in which at least one subregion of a support roller (13) is imaged, is automatically determined,
for each determined identification region position from the image data, an analysis image region position is automatically defined in the thermal image data, and
in each defined analysis image region position, thermal image data are automatically analysed in order to automatically determine the functional state of support rollers (13),
**characterised in that**
the image data that can be captured by the imaging sensor system also comprise photographic image data in addition to the thermal image data,
image data of at least one subregion of the belt conveyor system (1) are also captured as photographic image data,
the captured image data of the belt conveyor system (1), in which at least one identification image region position is determined automatically, are photographic image data in which photographic image data regions are automatically detected as image data regions, and
the position of each detected photographic image data region is automatically provided as the identification image region position.

2. Method according to claim 1, wherein
image data of at least one subregion of the belt conveyor system (1) are captured as thermal image data by moving the at least one unmanned vehicle (2) with the at least one imaging sensor system, comprising a thermal image sensor device (21) for capturing the thermal image data and a photographic image sensor device (22) for capturing the photographic image data, along at least one subregion of the belt conveyor system (1), image data from at least one subregion of the belt conveyor system (1) are captured with the imaging sensor system and the image data comprise at least thermal image data and photographic image data, in the captured image data of the belt conveyor system (1) the at least one identification image region position is automatically determined by automatically detecting, in the photographic image data captured by at least one subregion of the belt conveyor system (1), photographic image data regions in which at least one subregion of a support roller (13) is imaged, and the position of the respectively detected photographic image data region is automatically provided as the identification image region position of the respective support roller (13),
for each identification image region position determined from the photographic image data, an analysis image region position is automatically defined in the thermal image data by automatically defining, for each identification image region position of a support roller (13) determined from the photographic image data, an analysis image region position of the support roller (13) in the thermal image data, which position corresponds spatially to the respective identification image region position from the photographic image data,
the thermal image data in each defined analysis image region position are automatically analysed by automatically determining temperature data of the respective support roller (13) from the thermal image data in the defined analysis image region position of the support roller (13), and automatically assigning the temperature data determined from the analysis image region position to a functional state of the respective support rollers (13).

3. Method according to claim 1 or 2, wherein the at least one identification image region position is automatically determined in the captured photographic image data of the belt conveyor system (1) by automatically detecting, in the photographic image data, photographic image data regions in which at least one detectable object is imaged, automatically detecting support rollers (13) or subregions of support rollers (13) among the detectable objects in the photographic image data regions thus detected, and for each detected support roller (13) as wel as for each detected subregion of a support roller (13), providing the position of the photographic image data region in which the support roller (13) or the subregion of the support roller (13) is imaged as an identification image region position.

4. Method according to any one of claims 1 to 3, wherein the recognition quality in the automatic determination of the identification image region position in the captured photographic image data, in particular the recognition quality of the automatic detection of photographic image data regions in which at least one detectable object is imaged, in particular at least one subregion of a support roller (13), and/or the recognition quality of the automatic detection of support rollers (13) or subregions of support rollers (13) in the detected photographic image data regions is improved through a learning method carried out by means of an artificial neural network, in particular by means of a single-level or multi-level convolutional neural network.

5. Method according to any one of claims 1 to 4, wherein in each defined analysis image region position, thermal image data are automatically analysed by automatically selecting thermal image data in the defined analysis image region positions, which are thermal data of the support rollers (13), and the selected thermal data in the defined analysis image region positions are automatically analysed.

6. Method according to claim 5, wherein thermal image data are automatically selected that lie in those subregions within the defined analysis image region positions in which thermal image data are arranged in circular or near-circular contours and/or in which thermal image data correspond to the temperatures of an equal temperature level.

7. Method according to claim 5 or 6, wherein the recognition quality in the automatic selection of the thermal image data, which are thermal image data of the support rollers (13), is improved through a learning method carried out by means of an artificial neural network, in particular the recognition quality in the automatic selection of the thermal image data which lie in those subregions within the defined analysis image region positions in which thermal image data are arranged in circular or near-circular contours and/or in which thermal image data correspond to the temperatures of an equal temperature level.

8. Method according to any one of claims 1 to 7, wherein the image data of the belt conveyor system (1) are in each case assigned to a position in the belt conveyor system (1) and/or for defined analysis image region positions the thermal image data or evaluation information are assigned to an individual support roller (13) of the belt conveyor system (1), wherein the assignment is performed in particular via a radio-based position determination, by comparing captured image data against reference image data, by recording the route travelled by the unmanned vehicle (2), and/or by detecting the orientation of the imaging sensor system.

9. Method according to claim 2 or any one of claims 3 to 8 referring back to claim 2, wherein the temperature data determined from the analysis image region position are automatically assigned to a functional state of a support roller (13), by either automatically classifying the determined temperature data of the respective support roller (13) to one functional state of a plurality of previously defined functional states or by automatically assigning said data to a functional state as part of a cluster analysis, in particular as part of a multivariate cluster analysis.

10. Method according to any one of claims 1 to 9, wherein the recognition quality in the automatic determination of the functional state of support rollers (13), in particular the classification of the thermal image data, is improved through a learning method carried out by means of an artificial neural network.

11. Method according to any one of claims 1 to 10, wherein the functional state, the image data and/or, if applicable, the determined temperature data for the respective support roller (13) are recorded in a functional state data collection.

12. Method for identifying functionally impaired support rollers (13) of a belt conveyor system (1) during the operation of the belt conveyor system (1), the method comprising the method for the machine-based determination of the functional state of the support rollers (13) of a belt conveyor system (1) according to any one of claims 1 to 11, wherein functionally impaired support rollers (13) are detected, a time for a replacement of the respective support roller (13) is determined based on a comparison with historical data from a functional state database, and for this support roller (13) the determined time is output to a communication interface.

13. Apparatus for the machine-based determination of the functional state of support rollers (13) of a belt conveyor system (1) during the operation of the belt conveyor system (1),
the apparatus comprising at least one unmanned vehicle (2) with at least one imaging sensor system that can be moved along at least one subregion of the belt conveyor system (1), by means of which sensor system at least sections of the belt conveyor system (1) can be captured by sensors in the form of image data, and which comprises at least one thermal image sensor device (21) for capturing image data in the form of thermal image data,
a data processing device (3) for evaluating the captured image data in order to determine the functional state of support rollers (13) of a belt conveyor system (1) during the operation of the belt conveyor system (1), wherein the data processing device (3) has an image region identification module (31) which is configured to automatically determine in captured image data at least one identification image region position in which at least one subregion of a support roller (13) is imaged, an image region definition module (34) which is configured to automatically define an analysis image region position in the thermal image data for an identification image region position determined from the image data, and a state identification module (35) which is configured to automatically analyse thermal image data at a defined analysis image region position to automatically determine the functional state of support rollers (13),
**characterised in that**
the imaging sensor system is configured that the image data that can be captured comprise photographic image data in addition to the thermal image data,
wherein the at least one imaging sensor system also comprises, in addition to the thermal image sensor device (21), a photographic image sensor device (22) for capturing image data of at least one subregion of the belt conveyor system (1) in the form of photographic image data,
wherein the image region identification module (31) is configured to use, as image data of the belt conveyor system (1) in which at least one identification image region position is automatically determined, photographic image data in which photographic image data regions are automatically detected as image data regions, and to automatically provide the position of a respectively detected photographic image data region as the identification image region position.

14. Apparatus according to claim 13, wherein
the image region identification module (31) has an image region detection module (32) and an interface module (33), the image region detection module (32) of which is configured to automatically detect photographic image data regions in the captured photographic image data in which at least one subregion of a support roller (13) is imaged, and the interface module (33) of which is configured to automatically provide the position of the detected photographic image data region as the identification image region position of the respective support roller (13),
and wherein the image region definition module (34) is configured to automatically define, for each identification image region position of a support roller (13) determined from the photographic image data, an analysis image region position of the support roller (13) in the thermal image data that corresponds spatially to the respective identification image region position from the photographic image data, and wherein the state identification module (35) has an analysis module (36) and an assignment module (37), the analysis module (36) of which is configured to automatically determine temperature data of the respective support roller (13) in the defined analysis image region position of the support roller (13) from the thermal image data, and the assignment module (37) of which is configured to automatically assign the temperature data determined from the analysis image region position to a functional state of the respective support rollers (13).

15. Apparatus according to claim 14, wherein the data processing device (3) has at least one trainable artificial neural network by means of which at least one of the following detections is carried out: the detection of support rollers (13) or subregions of support rollers (13) for the automatic determination of photographic image data regions in the captured photographic image data, in which at least one subregion of a support roller (13) is imaged, the detection of thermal image data of a support roller (13) for the automatic determination of temperature data of the support roller (13) in a defined analysis image region position of the support roller (13), the detection of functional states of a support roller (13) from the determined temperature data of the support roller (13) for the automatic assignment of the functional state of the support rollers (13).

## Revendications

1. Procédé pour déterminer par machine l'état de fonctionnement de rouleaux de support (13) d'une installation de transporteur à courroie (1) pendant le fonctionnement de l'installation de transporteur à courroie (1), dans lequel est prévu au moins un véhicule sans équipage (2) avec au moins un système de capteurs d'imagerie au moyen duquel l'installation de transporteur à courroie (1) peut être détectée par capteurs au moins par sections sous forme de données d'image, dans lequel des données d'image d'au moins une zone partielle de l'installation de transporteur à courroie (1) sont détectées sous forme de données d'image thermique,
dans les données d'image détectées de l'installation de transporteur à courroie (1), au moins une position de zone d'image de reconnaissance est déterminée automatiquement, dans laquelle au moins une zone partielle d'un rouleau de support (13) est représentée,
pour chaque position de zone d'image de reconnaissance déterminée à partir des données d'image, respectivement une position de zone d'image d'analyse est définie automatiquement dans les données d'image thermique, et
dans chaque position de zone d'image d'analyse définie, des données d'image thermique sont analysées automatiquement pour déterminer automatiquement l'état de fonctionnement de rouleaux de support (13),
**caractérisé en ce que**
les données d'image détectables par le système de capteurs d'imagerie comprennent, en plus des données d'image thermique, des données d'image photographique,
des données d'image d'au moins une zone partielle de l'installation de transporteur à courroie (1) sont également détectées sous forme de données d'image photographique,
les données d'image détectées de l'installation de transporteur à courroie (1), dans lesquelles au moins une position de zone d'image de reconnaissance est déterminée automatiquement, sont des données d'image photographique dans lesquelles des zones de données d'image photographique sont reconnues automatiquement en tant que zones de données d'image, et
la position d'une zone de données d'image photographique respectivement reconnue est fournie automatiquement en tant que position de zone d'image de reconnaissance.

2. Procédé selon la revendication 1, dans lequel
des données d'image d'au moins une zone partielle de l'installation de transporteur à courroie (1) sont détectées en tant que données d'image thermique, en ce que le au moins un véhicule sans équipage (2) est déplacé avec le au moins un système de capteurs d'imagerie comprenant un dispositif de détection d'image thermique (21) pour détecter les données d'image thermique et un dispositif de détection d'image photographique (22) pour détecter les données d'image photographique le long d'au moins une zone partielle de l'installation de transporteur à courroie (1), des données d'image d'au moins une zone partielle de l'installation de transporteur à courroie (1) sont détectées avec le système de capteurs d'imagerie, et les données d'image comprennent au moins des données d'image thermique et des données d'image photographique, la au moins une position de zone d'image de reconnaissance est déterminée automatiquement dans les données d'image photographique détectées de l'installation de transporteur à courroie (1), en ce que des zones de données d'image photographique sont reconnues automatiquement dans les données d'image photographique détectées par au moins une zone partielle de l'installation de transporteur à courroie (1), dans lesquelles au moins une zone partielle d'un rouleau de support (13) est représentée, et la position de la zone de données d'image photographique respectivement reconnue est fournie automatiquement en tant que position de zone d'image de reconnaissance du rouleau de support (13) respectif,
pour chaque position de zone d'image de reconnaissance déterminée à partir des données d'image photographique, respectivement une position de zone d'image d'analyse est définie automatiquement dans les données d'image thermique, en ce que pour chaque position de zone d'image de reconnaissance déterminée d'un rouleau de support (13) à partir des données d'image photographique, une position de zone d'image d'analyse du rouleau de support (13) est définie automatiquement dans les données d'image thermique, position qui correspond spatialement à la position de zone d'image de reconnaissance respective à partir des données d'image lumineuse,
dans chaque position de zone d'image d'analyse définie, les données d'image thermique sont analysées automatiquement, en ce que dans la position de zone d'image d'analyse définie du rouleau de support (13), des données de température du rouleau de support (13) respectif sont déterminées automatiquement à partir des données d'image thermique et les données de température déterminées à partir de la position de zone d'image d'analyse sont associées automatiquement à un état de fonctionnement du rouleau de support (13) respectif.

3. Procédé selon la revendication 1 ou 2, dans lequel la au moins une position de zone d'image de reconnaissance est déterminée automatiquement dans les données d'image lumineuse détectées de l'installation de transporteur à courroie (1), en ce que dans les données d'image photographique, des zones de données d'image photographique sont automatiquement reconnues, dans lesquelles au moins un objet reconnaissable est représenté, dans les zones de données d'image lumineuse ainsi reconnues, parmi les objets reconnaissables, des rouleaux de support (13) ou des zones partielles de rouleaux de support (13) sont automatiquement reconnus et, pour chaque rouleau de support (13) reconnu ainsi que pour chaque zone partielle reconnue d'un rouleau de support (13), la position de zone de données d'image photographique, dans laquelle le rouleau de support (13) ou la zone partielle du rouleau de support (13) est représenté, est fournie en tant que position de zone d'image de reconnaissance.

4. Procédé selon l'une quelconque des revendications 1 à 3, dans lequel la qualité de reconnaissance lors de la détermination automatique de la position de zone d'image de reconnaissance dans les données d'image photographique détectées, en particulier la qualité de reconnaissance de la reconnaissance automatique de zones de données d'image photographique dans lesquelles au moins un objet reconnaissable est représenté, en particulier au moins une zone partielle d'un rouleau de support (13), et/ou la qualité de reconnaissance de la reconnaissance automatique de rouleaux de support (13) ou de zones partielles de rouleaux de support (13) dans les zones de données d'image photographique reconnues est améliorée à l'aide d'un procédé d'apprentissage réalisé au moyen d'un réseau neuronal artificiel, en particulier au moyen d'un réseau neuronal convolutif à un ou plusieurs niveaux.

5. Procédé selon l'une quelconque des revendications 1 à 4, dans lequel des données d'image thermique sont analysées automatiquement dans chaque position de zone d'image d'analyse définie, en ce que des données d'image thermique sont automatiquement sélectionnées dans les positions de zone d'image d'analyse définies, données qui sont des données d'image thermique des rouleaux de support (13), et les données thermiques sélectionnées sont automatiquement analysées dans les positions de zone d'image d'analyse définies.

6. Procédé selon la revendication 5, dans lequel des données d'image thermique sont automatiquement sélectionnées, qui sont situées dans des zones partielles à l'intérieur des positions de zone d'image d'analyse définies dans lesquelles des données d'image thermique sont disposées selon des contours circulaires ou quasi circulaires et/ou dans lesquelles des données d'image thermique correspondent aux températures d'un même niveau de température.

7. Procédé selon la revendication 5 ou 6, dans lequel la qualité de reconnaissance lors de la sélection automatique des données d'image thermique, qui sont des données d'image thermique des rouleaux de support (13), est améliorée à l'aide d'un procédé d'apprentissage réalisé au moyen d'un réseau neuronal artificiel, en particulier la qualité de reconnaissance lors de la sélection automatique des données d'image thermique qui se situent dans des zones partielles à l'intérieur des positions de zone d'image d'analyse définies dans lesquelles des données d'image thermique sont disposées selon des contours circulaires ou quasi circulaires et/ou dans lesquelles des données d'image thermique correspondent aux températures d'un même niveau de température.

8. Procédé selon l'une quelconque des revendications 1 à 7, dans lequel les données d'image de l'installation de transporteur à courroie (1) sont respectivement associées à une position dans l'installation de transporteur à courroie (1) et/ou, pour des positions de zone d'image d'analyse définies, les données d'image thermique ou les informations d'évaluation sont respectivement associées à un rouleau de support individuel (13) de l'installation de transporteur à courroie (1), dans lequel l'association est effectuée en particulier par l'intermédiaire d'une détermination de position radio, par l'intermédiaire d'une comparaison de données d'image détectées avec des données d'image de comparaison, par l'intermédiaire d'une détection de trajet du véhicule sans équipage (2) et/ou par l'intermédiaire d'une détection d'orientation du système de capteurs d'imagerie.

9. Procédé selon la revendication 2 ou l'une quelconque des revendications 3 à 8 se rapportant à la revendication 2, dans lequel les données de température déterminées à partir de la position de zone d'image d'analyse sont automatiquement associées à un état de fonctionnement d'un rouleau de support (13), en ce que soit les données de température déterminées du rouleau de support (13) respectif sont classées automatiquement dans un état de fonctionnement respectif parmi une pluralité d'états de fonctionnement préalablement définis, soit en associant automatiquement les données à un état de fonctionnement dans le cadre d'une analyse par groupe, en particulier dans le cadre d'une analyse par groupe multivariée.

10. Procédé selon l'une quelconque des revendications 1 à 9, dans lequel la qualité de reconnaissance lors de la détermination automatique de l'état de fonctionnement de rouleaux de support (13), en particulier la classification des données d'image thermique, est améliorée à l'aide d'un procédé d'apprentissage réalisé au moyen d'un réseau neuronal artificiel.

11. Procédé selon l'une quelconque des revendications 1 à 10, dans lequel, pour chaque rouleau de support (13), l'état de fonctionnement, les données d'image et/ou, le cas échéant, les données de température déterminées sont enregistrés dans une collection de données d'état de fonctionnement.

12. Procédé d'identification de rouleaux de support (13) à fonctionnement altéré d'une installation de transporteur à courroie (1) pendant le fonctionnement de l'installation de transporteur à courroie (1), le procédé comprenant le procédé de détermination par machine de l'état de fonctionnement de rouleaux de support (13) d'une installation de transporteur à courroie (1) selon l'une quelconque des revendications 1 à 11, dans lequel des rouleaux de support (13) à fonctionnement altéré sont reconnus, un moment pour un remplacement du rouleau de support (13) respectif est déterminé à l'aide d'une comparaison avec des données historiques provenant d'une base de données d'état de fonctionnement, et le moment déterminé est délivré à une interface de communication pour ce rouleau de support (13).

13. Appareil pour déterminer par machine l'état de fonctionnement de rouleaux de support (13) d'une installation de transporteur à courroie (1) pendant le fonctionnement de l'installation de transporteur à courroie (1),
l'appareil comprenant au moins un véhicule sans équipage (2) mobile le long d'au moins une zone partielle de l'installation de transporteur à courroie (1) avec au moins un système de capteurs d'imagerie au moyen duquel l'installation de transporteur à courroie (1) peut être détectée par des capteurs au moins par sections sous forme de données d'image et qui comprend au moins un dispositif de détection d'image thermique (21) pour la détection de données d'image sous forme de données d'image thermique,
un dispositif de traitement de données (3) pour évaluer les données d'image détectées, pour déterminer l'état de fonctionnement de rouleaux de support (13) d'une installation de transporteur à courroie (1) pendant le fonctionnement de l'installation de transporteur à courroie (1), dans lequel le dispositif de traitement de données (3) présente un module de détermination de zone d'image (31) qui est configuré pour déterminer automatiquement, dans des données d'image détectées, au moins une position de zone d'image de reconnaissance dans laquelle au moins une zone partielle d'un rouleau de support (13) est représentée, un module de définition de zone d'image (34) qui est configuré pour définir automatiquement, pour une position de zone d'image de reconnaissance déterminée à partir des données d'image, respectivement une position de zone d'image d'analyse dans les données d'image thermique, et un module de détermination d'état (35) qui est configuré pour analyser automatiquement, dans une position de zone d'image d'analyse définie, des données d'image thermique pour déterminer automatiquement l'état de fonctionnement de rouleaux de support (13),
**caractérisé en ce que**
le système de capteurs d'imagerie est configuré de manière à ce que les données d'image détectables comprennent en plus des données d'image photographique en plus des données d'image thermique,
dans lequel le au moins un système de capteurs d'imagerie comprend, en plus du dispositif de détection d'image thermique (21), également un dispositif de détection d'image photographique (22) pour détecter des données d'image d'au moins une zone partielle de l'installation de transporteur à courroie (1) sous forme de données d'image photographique,
dans lequel le module de détermination de zone d'image (31) est configuré pour utiliser, en tant que données d'image de l'installation de transporteur à courroie (1) dans lesquelles au moins une position de zone d'image de reconnaissance est déterminée automatiquement, des données d'image photographique dans lesquelles des zones de données d'image photographique sont reconnues automatiquement en tant que zones de données d'image, et pour fournir automatiquement la position de zone d'image de reconnaissance respectivement reconnue en tant que position de zone d'image de reconnaissance.

14. Appareil selon la revendication 13, dans lequel
le module de détermination de zone d'image (31) présente un module de reconnaissance de zone d'image (32) et un module d'interface (33), dont le module de reconnaissance de zone d'image (32) est configuré pour reconnaître automatiquement, dans les données d'image photographique détectées, des zones de données d'image photographique dans lesquelles au moins une zone partielle d'un rouleau de support (13) est représentée, et dont le module d'interface (33) est configuré pour fournir automatiquement la position de la zone de données d'image photographique reconnue en tant que position de zone d'image de reconnaissance du rouleau de support (13) respectif,
et dans lequel le module de définition de zone d'image (34) est configuré pour définir automatiquement, pour chaque position de zone d'image de reconnaissance déterminée d'un rouleau de support (13) à partir des données d'image photographique, respectivement une position de zone d'image d'analyse du rouleau de support (13) dans les données d'image thermique, position qui correspond spatialement à la position de zone d'image de reconnaissance respective à partir des données d'image lumineuse, et dans lequel le module de détermination d'état (35) présente un module d'analyse (36) et un module d'association (37), dont le module d'analyse (36) est configuré pour déterminer automatiquement, dans la position de zone d'image d'analyse définie du rouleau de support (13), des données de température du rouleau de support (13) respectif à partir des données d'image thermique, et dont le module d'association (37) est configuré pour associer automatiquement les données de température déterminées à partir de la position de zone d'image d'analyse à un état de fonctionnement des rouleaux de support (13) respectifs.

15. Appareil selon la revendication 14, dans lequel le dispositif de traitement de données (3) présente au moins un réseau neuronal artificiel adaptatif, au moyen duquel au moins une des reconnaissances suivantes est effectuée : la reconnaissance de rouleaux de support (13) ou de zones partielles de rouleaux de support (13) pour déterminer automatiquement des zones de données d'image photographique dans les données d'image photographique détectées dans lesquelles au moins une zone partielle d'un rouleau de support (13) est représentée, la reconnaissance de données d'images thermiques d'un rouleau de support (13) pour déterminer automatiquement des données de température du rouleau de support (13) dans une position de zone d'image d'analyse définie du rouleau de support (13), la reconnaissance d'états de fonctionnement d'un rouleau de support (13) à partir des données de température déterminées du rouleau de support (13) pour associer automatiquement l'état de fonctionnement des rouleaux de support (13).
